# EUROPÄISCHE PATENTSCHRIFT

(11) **EP 2 837 259 B1**
(45) Veröffentlichungstag und Bekanntmachung des Hinweises auf die Patenterteilung: **10.10.2018**
(21) Anmeldenummer: 13723654.3
(22) Anmeldetag: 15.04.2013
(51) Int. Cl.: H05B 33/08, H02M 3/335

(54) **VERFAHREN ZUM BETREIBEN EINES LLC-RESONANZWANDLERS FÜR EIN LEUCHTMITTEL, WANDLER UND LED-KONVERTER**
METHOD OF OPERATING A LLC RESONANCE CONVERTER FOR A LIGHT SOURCE, AND CORRESPONDING CONVERTER AND LED POWER SOURCE
METHODE POUR ALIMENTER UN CONVERTISSEUR RESONANT LLC POUR UNE SOURCE LUMINEUSE, ET CONVERTISSEUR ET SOURCE DE PUISSANCE POUR LED CORRESPONDANTE

(30) Priorität: 13.04.2012 DE 102012007477
(43) Veröffentlichungstag der Anmeldung: 18.02.2015
(73) Patentinhaber: Tridonic GmbH & Co. KG, 6851 Dornbirn (AT)
(72) Erfinder: VONACH, Christoph, A-6850 Dornbirn (AT); PEREIRA, Eduardo, CH-8854 Siebnen (CH)
(74) Vertreter: Banzer, Hans-Jörg
(86) Internationale Anmeldenummer: PCT/AT2013/000065
(87) Internationale Veröffentlichungsnummer: WO 2013/152368

(56) Entgegenhaltungen:
- WO-A1-2011/060701
- WO-A1-2013/092656
- WO-A1-2013/092662
- WO-A2-2010/065598
- DE-A1-102010 031 244
- US-A1- 2011 317 452

## Beschreibung

Die Erfindung betrifft einen Wandler zur Versorgung eines Leuchtmittels, einen LED-Konverter und ein Verfahren zum Betreiben eines derartigen Wandlers. Die Erfindung betrifft insbesondere derartige Vorrichtungen und Verfahren, bei denen ein Leuchtmittel, insbesondere ein Leuchtmittel, das ein oder mehrere Leuchtdioden umfasst, mit einem so genannten SELV ("Separated Extra-Low Voltage" oder "Safety Extra-Low Voltage")-Gerät mit Energie versorgt wird.

Wandler mit Potentialtrennung dienen zur galvanisch entkoppelten Übertragung von elektrischer Energie von einer Eingangsseite zu einer Ausgangsseite. Derartige Wandler werden in verschiedenen Anwendungen zur Strom- oder Spannungsversorgung, wie beispielsweise in getakteten Schaltnetzteilen, eingesetzt. Bei getakteten Wandlern werden steuerbare Schalter, die in Form von Leistungsschaltern ausgestaltet sein können, verwendet und getaktet betrieben, um elektrische Energie auf die Ausgangsseite zu übertragen. Eine galvanisch entkoppelte Energieübertragung kann durch Verwendung eines Transformators oder anderen Übertragers erzielt werden. Eine derartige galvanische Trennung bzw. Potentialtrennung wird aus Sicherheitsgründen bei Betriebsgeräten für Leuchtmittel gefordert, um einen ELV ("Extra-Low Voltage")-Bereich durch eine so genannte Potentialbarriere oder SELV-Barriere von Bereichen mit höherer Versorgungsspannung, insbesondere Netzspannung, zu trennen.

Zum Betreiben von Leuchtmitteln können Wandler eingesetzt werden, die als so genannte Resonanzwandler ausgestaltet sind, die einen Resonanzkreis aufweisen. Der Resonanzkreis kann ein Serien- oder Parallelresonanzkreis sein. Bei der Ausgestaltung von Wandlern besteht das Ziel, Verluste gering zu halten. Resonanzwandler, die einen LLC-Resonanzkreis mit zwei Induktivitäten und einer Kapazität umfassen, können primärseitig resonant oder quasiresonant gesteuert werden. Derartige Wandler haben den Vorteil, dass ein energieeffizienter Betrieb mit relativ geringen Schaltverlusten möglich ist.

Wandler für Leuchtmittel oder Betriebsgeräte, die derartige Wandler umfassen, können als Konstantstromquelle (auch FCC-Gerät, "Fixed Constant Current") oder Konstantspannungsquelle (auch FCV-Gerät, "Fixed Constant Voltage") ausgestaltet sein bzw. betrieben werden. Konstantspannungsquellen können beispielsweise für LED-Module eingesetzt werden, die eine Elektronik aufweisen, um aus der von der Konstantspannungsquelle gelieferten Ausgangsspannung eine entsprechende Stromversorgung der LEDs mit einem vorgegebenen Strom sicherzustellen.

Bei der Herstellung der Konstantspannungsquelle zum Betreiben von LEDs ist im allgemeinen noch nicht bekannt, mit wie vielen LEDs der entsprechende Wandler eingesetzt werden soll. Wenn der Wandler für eine bestimmte Anzahl oder Art von LEDs oder ein bestimmtes LED-Modul optimiert ist, kann eine entsprechende Angabe für den Verwender des Wandlers bereitgestellt werden, um diesen zur Nutzung des Wandlers nur bei der jeweiligen Art von LEDs oder dem entsprechenden LED-Modul anzuhalten. Es ist jedoch nicht gewährleistet, dass sich der Verwender an die Angabe hält. Es ist daher wünschenswert, Wandler anzugeben, die eine mit dem Ausgang des Wandlers verbundene Last automatisch erkennen können. Dies erlaubt, den Betrieb des Wandlers an die Last anzupassen, falls dies erforderlich ist.

Ein Ansatz zur Lasterkennung besteht in einer Messung, die am Ausgang oder an einer anderen geeigneten Stelle in der Sekundärseite des Wandlers durchgeführt wird. Die auf der Sekundärseite erfasste Spannung kann dann über einen Isolator zur Primärseite rückgeführt wird. Die Überbrückung der SELV-Barriere erfordert entsprechende Komponenten, die Bauraum und/oder Kosten des Betriebsgeräts erhöhen. Die US 2012/0033453 A1 beschreibt ein Beispiel für einen resonanten Wandler, der eine Halbbrücke und einen LLC-Kreis umfasst und bei dem ein Isolator vorgesehen ist, um eine ausgangsseitig gemessene Größe an die Eingangsseite zurückzuführen. Die US 2012/0033453 A1 beschreibt auch ein Beispiel für einen resonanten Wandler, bei dem Schalter in der Sekundärseite des Wandlers gesteuert werden. Dies erfordert entsprechende Schaltungskomponenten, insbesondere Leistungsschalter, auf der Sekundärseite. Es wäre wünschenswert, eine Lasterkennung, die eine Anpassung des Betriebs des Wandlers an die erkannte Last erlaubt, auf einfache Weise zu realisieren. Es wäre insbesondere wünschenswert, eine Lasterkennung und Anpassung des Betriebs des Wandlers an die erkannte Last zu realisieren, ohne dass dazu notwendig eine Messung auf der Sekundärseite durchgeführt wird.

Die DE 10 2010 031244 A1, die als Basis für den Oberbegriff der unabhängigen Patentansprüche dient, betrifft ein modulares LED-Beleuchtungssystem. Eine Steuergröße eines DC-DC-Wandlers kann abhängig von einer Last auf der Sekundärseite eingestellt werden.

Die WO 2011/060701 A1 offenbart eine Konstantstromquelle.

Die WO 2010/065598 A2 offenbart Vorrichtungen und Verfahren zur primärseitigen Steuerung sekundärseitiger Ströme eines Wandlers.

Die US 2011/317452 A1 offenbart einen Spannungswandler, der als bidirektionaler Resonanzwandler ausgestaltet ist.

Die WO 2013/092656 A1 und die WO 2013/092662 A1, die nachveröffentlichter Stand der Technik nach Artikel 54(3) EPÜ sind, offenbaren jeweils Betriebsgeräte mit einem Resonanzwandler.

Es besteht ein Bedarf an Vorrichtungen und Verfahren, die Verbesserungen im Hinblick auf die genannten Ziele bieten. Insbesondere besteht ein Bedarf an Vorrichtungen und Verfahren, bei denen der schaltungstechnische Aufwand und/oder die Kosten, die bei herkömmlichen Vorrichtungen zum Überbrücken der SELV-Barriere verbunden sind, reduziert oder vermieden werden können. Es besteht auch ein Bedarf an derartigen Vorrichtungen und Verfahren, die eine effiziente Energieübertragung erlauben.

Erfindungsgemäß werden ein Verfahren, ein Wandler und ein LED-Konverter mit den in den unabhängigen Ansprüchen angegebenen Merkmalen angegeben. Die abhängigen Ansprüche definieren Ausführungsformen.

Nach Ausführungsbeispielen der Erfindung wird ein LLC-Resonanzwandler, der eine primärseitige, getaktet betriebene Halbbrücke und einen LLC-Resonanzkreis umfasst, so betrieben, dass primärseitig eine Messgröße erfasst wird, aus der die Last ermittelbar ist, die mit einem Ausgang einer Sekundärseite des LLC-Resonanzwandlers gekoppelt ist. Die Detektion der Last erfolgt basierend auf der in der primärseitigen Schaltung erfassten Messgröße. Die Messgröße kann einem zeitlichen Mittelwert eines Stroms entsprechen, der in der Halbbrückenschaltung von dem LLC-Resonanzkreis zu Masse fließt. Die Messgröße kann auch zu einem derartigen Strom proportional sein und beispielsweise dem zeitlichen Mittelwert des Stroms durch einen Shunt-Widerstand oder der über den Shunt-Widerstand abfallenden Spannung entsprechen. Diese Größen erlauben die Ermittlung der von dem LLC-Resonanzwandler übertragenen Leistung und können somit zur Detektion der Last dienen. Abhängig von der detektierten Last kann die Steuerung der Halbbrücke angepasst werden. Dies erlaubt die wenigstens teilweise Kompensation von lastabhängigen Einflüssen auf die Ausgangsspannung. Die (mittlere) Ausgangsspannung kann auf einem wenigstens näherungsweise lastunabhängigen Wert gehalten werden. Der LLC-Resonanzwandler kann als Konstantspannungsquelle betrieben werden.

Nach Ausführungsbeispielen kann somit eine in der primärseitigen Schaltung des LLC-Resonanzwandlers erfasste Messgröße verarbeitet werden, um Informationen über die Last zu erhalten. Eine Erfassung der Last auf der Sekundärseite und Rückführung über die SELV-Barriere ist nicht mehr unbedingt erforderlich. Lastabhängige Veränderungen der Ausgangsspannung können zumindest teilweise kompensiert werden, ohne dass die Last oder eine diese charakterisierende Größe auf der Sekundärseite erfasst werden muss und/oder ohne dass eine aktive Steuerung beispielsweise von Leistungsschaltern auf der Sekundärseite erfolgen muss.

Nach einem Ausführungsbeispiel wird ein Verfahren zum Betreiben eines LLC-Resonanzwandlers für ein Leuchtmittel angegeben. Der LLC-Resonanzwandler weist eine primärseitige Schaltung, die eine Halbbrücke und einen LLC-Resonanzkreis umfasst, und eine davon galvanisch getrennte Sekundärseite auf. Bei dem Verfahren erfolgt eine Steuerung der Halbbrücke durch getaktetes Schalten von Schaltern der Halbbrücke. Eine Last, die von einem Ausgang der Sekundärseite mit Energie versorgt wird, wird basierend auf einer in der primärseitigen Schaltung erfassten Messgröße detektiert. Die Steuerung der Halbbrücke wird basierend auf der in der primärseitigen Schaltung erfassten Messgröße angepasst.

Das Verfahren nutzt, dass bei dem LLC-Resonanzwandler primärseitig erfasste Messgrößen Informationen über die Last liefern können, die an den Ausgang des Wandlers angeschlossen ist. Dies erlaubt, auch ohne Messung auf der Sekundärseite Informationen über die übertragene Leistung und somit über die Last zu erhalten.

Der Wandler kann als Konstantspannungsquelle bzw. FCV-Gerät ("Fixed Constant Voltage") betrieben werden sein. Der Wandler kann als ein Gerät mit Potentialtrennung ausgestaltet sein, bei dem ein SELV-Bereich und ein Nicht-SELV-Bereich durch eine SELV-Barriere getrennt sind.

Die Messgröße kann ermittelt werden, während die Halbbrücke auf eine vorbekannte Weise betrieben wird. Die Messgröße kann insbesondere ermittelt werden, während ein erster Schalter und ein zweiter Schalter der Halbbrücke mit einer vorgegebenen, festen Frequenz wechselseitig getaktet geschaltet werden.

Die Steuerung der Halbbrücke kann so angepasst werden, dass eine lastabhängige Verschiebung einer Ausgangsspannung des LLC-Resonanzwandlers wenigstens teilweise kompensiert wird.

Das Anpassen der Steuerung der Halbbrücke kann das Einstellen einer Taktung der Schalter der Halbbrücke umfassen. Insbesondere kann eine Frequenz, mit der ein erster Schalter und ein zweiter Schalter der Halbbrücke getaktet geschaltet werden, eingestellt werden. Dadurch wird es beispielsweise möglich, wenn eine lastabhängige Verringerung der Ausgangsspannung erkannt wird, diese dadurch wenigstens teilweise zu kompensieren, dass die Schaltfrequenz der Schalter auf einen neuen Wert eingestellt wird, bei dem die Verstärkung des Wandlers für die entsprechende Last größer wird, d.h. sich näher zu der Frequenz zu bewegen, bei der die Verstärkung als Funktion der Frequenz für die entsprechende Last ihr Maximum hat. Ähnlich wird es beispielsweise möglich, wenn eine lastabhängige Erhöhung der Ausgangsspannung erkannt wird, diese dadurch wenigstens teilweise zu kompensieren, dass die Schaltfrequenz der Schalter auf einen neuen Wert eingestellt wird, bei dem die Verstärkung des Wandlers für die entsprechende Last kleiner wird, d.h. sich weiter von der Frequenz weg zu bewegen, bei der die Verstärkung als Funktion der Frequenz für die entsprechende Last ihr Maximum hat.

Eine Steuereinrichtung kann die Frequenz automatisch abhängig von der Messgröße unter Verwendung einer Tabellenwertabfrage und/oder durch rechnerische Verarbeitung der Messgröße einstellen. Die Steuereinrichtung kann als integrierte Halbleiterschaltung ausgestaltet sein. Die Steuereinrichtung kann als anwendungsspezifische Spezialschaltung (ASIC, "Application Specific Integrated Circuit") oder anderer Chip ausgestaltet sein.

Die Tabellenwerte und/oder die rechnerische Verarbeitung können so implementiert sein, dass sie von einer Lastabhängigkeit der Ausgangsspannung, die bei fester Taktung der Halbbrücke auftritt, abhängen. Dadurch können lastabhängige Variationen der Ausgangsspannung wirksam reduziert werden. Die Tabellenwertabfrage und/oder die rechnerische Verarbeitung können so implementiert sein, dass bei der entsprechend geänderten Steuerung der Halbbrücke, beispielsweise durch Wahl einer neuen Schaltfrequenz der Schalter, die Abweichung der Ausgangsspannung von einem Zielwert kleiner als ein Schwellenwert ist. Die Tabellenwerte und/oder die rechnerische Verarbeitung können abhängig von einem theoretischen Modell des LLC-Resonanzwandlers und/oder abhängig von Messungen an einem LLC-Resonanzwandlers festgelegt werden. Die Tabellenwerte und/oder die rechnerische Verarbeitung können so implementiert sein, dass aus der primärseitig erfassten Messgröße beispielsweise eine neue Schaltfrequenz für die Schalter der Halbbrücke ermittelbar ist.

Die in der primärseitigen Schaltung erfasste Messgröße kann zu einem Mittelwert eines Stroms proportional sein. Die in der primärseitigen Schaltung erfasste Messgröße kann zu einem Mittelwert eines Stroms proportional sein, der in dem Zustand der Halbbrücke, in dem der Schalter auf der Niederpotentialseite leitend geschaltet ist, durch eine Primärspule fließt. Eine zu diesem Strom proportionale Messgröße kann an einer geeigneten Stelle abgegriffen und analog oder digital gemittelt werden. Dazu kann beispielsweise ein Mittelwert eines Stroms durch einen Widerstand, der zwischen einen Schalter der Halbbrücke und Masse geschaltet ist, oder ein Mittelwert der über den Widerstand abfallenden Spannung als Messgröße verwendet werden. Diese Messgröße wird primärseitig erfasst und kann zur Detektion der Last verwendet werden. Als Messwiderstand, an dem der Mittelwert des Stroms erfasst wird, kann ein Shunt-Widerstand der Schaltung verwendet werden.

Zusätzlich kann ein Peakwert des Stroms erfasst werden. Dieser Peakwert kann für die Aktivierung eines Überstromschutzes verwendet werden. Es kann ein Schwellenwertvergleich für den Peakwert durchgeführt werden. Falls erkannt wird, dass der Überstromschutz aktiviert werden soll, kann die Frequenz, mit der die Schalter der Halbbrücke geschaltet werden, so geändert werden, dass die Verstärkung des LLC-Resonanzwandlers verringert wird.

Eine Versorgungsspannung der primärseitigen Schaltung wird zeitaufgelöst erfasst. Die Steuerung der Halbbrücke wird abhängig von einer zeitlichen Veränderung der Versorgungsspannung verändert.

Eine Taktung der Halbbrücke kann abhängig von einer Welligkeit der Versorgungsspannung der primärseitigen Schaltung zeitabhängig, insbesondere periodisch, verändert werden. Die Taktung der Halbbrücke kann mit einer zeitlichen Periode periodisch verändert werden, die der zeitlichen Periode der Welligkeit der Versorgungsspannung entspricht. Auf diese Weise kann eine Welligkeit in der Ausgangsspannung bzw. im Ausgangsstrom des LLC-Resonanzwandlers verringert werden. Darüber hinaus wird durch die zeitlich variierende Veränderung der Schaltfrequenz im Frequenzraum der zugehörige Spektralpeak verbreitert, was zu verbessertem Verhalten im Hinblick auf elektromagnetische Interferenz (EMI) führt.

Die Steuereinrichtung, die die Halbbrücke ansteuert und die die Anpassung der Steuerung der Halbbrücke vornimmt, nimmt die Kompensation zeitabhängiger Effekte der Versorgungsspannung der primärseitigen Schaltung, die auch als Busspannung bezeichnet wird, vor. Der aktuelle Wert der Versorgungsspannung der primärseitigen Schaltung kann mit einer Rate abgetastet werden, die größer als die Frequenz der Welligkeit ist. Die Steuereinrichtung kann gemäß der Welligkeit bzw. Spannungsrippel der Busspannung die Schaltfrequenz der Schalter der Halbbrücke automatisch ändern.

Zusätzlich kann die Steuereinrichtung eingerichtet sein, um abhängig von der Messgröße eine Prozedur zur Begrenzung der abgegebenen Leistung einzuleiten.

Alternativ oder zusätzlich kann die Steuereinrichtung eingerichtet sein, um abhängig von der Messgröße eine Fehlerdetektion durchzuführen und bei Detektion eines Fehlerzustands einen Fehler-Betriebszustand einzuleiten. Beispiele für von der Steuereinrichtung detektierte Fehler beinhalten einen Kurzschluss und/oder eine offene Schaltung am Ausgang des Wandlers. Der Fehler-Betriebszustand kann so realisiert werden, dass die Steuereinrichtung ein Signal ausgibt, das den Fehler anzeigt, eine Sicherheitsabschaltung einleitet und/oder andere Maßnahmen einleitet, die unerlaubte Betriebszustände des Wandlers verhindern.

Alternativ oder zusätzlich kann die Steuereinrichtung eingerichtet sein, um abhängig von der Messgröße ein Signal auszugeben, das Informationen über die erkannte Last enthält. Ein derartiges Signal kann beispielsweise ein gemäß dem DALI ("Digital Addressable Lighting Interface")-Standard erzeugtes Signal, z. B. ein Datentelegramm sein. Das Signal kann als Antwort auf eine entsprechende DALI-Anfrage erzeugt werden.

Nach einem weiteren Ausführungsbeispiel wird ein Wandler für ein Leuchtmittel angegeben. Der Wandler umfasst eine primärseitige Schaltung mit einer Halbbrücke und mit einem LLC-Resonanzkreis. Der Wandler umfasst eine Sekundärseite, die von der primärseitigen Schaltung galvanisch getrennt ist und die einen Ausgang zur Energieversorgung des Leuchtmittels aufweist. Der Wandler umfasst eine Steuereinrichtung zum Steuern der Halbbrücke, wobei die Steuereinrichtung eingerichtet ist, um abhängig von einer in der primärseitigen Schaltung erfassten Messgröße eine mit dem Ausgang der Sekundärseite verbundene Last zu detektieren und um die Halbbrücke abhängig davon zu steuern. Die Steuereinrichtung ist eingerichtet, um eine Steuerung der Halbbrücke abhängig von einer zeitlichen Veränderung einer zeitaufgelöst erfassten Versorgungsspannung der primärseitigen Schaltung zu verändern.

Die primärseitige Schaltung kann einen Widerstand aufweisen, der mit einem Schalter der Halbbrücke in Reihe geschaltet ist. Die Steuereinrichtung kann so eingerichtet sein, dass sie einen Mittelwert des Stroms durch den Widerstand oder eine dazu proportionale Größe als Messgröße verwendet.

Die Steuereinrichtung kann eingerichtet sein, um eine Frequenz, mit der ein erster Schalter und ein zweiter Schalter der Halbbrücke getaktet geschaltet werden, abhängig von der Messgröße einzustellen, um eine lastabhängige Verschiebung einer Ausgangsspannung des Wandlers wenigstens teilweise zu kompensieren.

Die Steuereinrichtung kann eingerichtet sein, um eine Taktung der Halbbrücke abhängig von einer zeitaufgelöst erfassten Versorgungsspannung der primärseitigen Schaltung zu verändern.

Ausgestaltungen des Wandlers nach vorteilhaften oder bevorzugten Ausführungsbeispielen sowie die damit jeweils erzielten Wirkungen entsprechen den unter Bezugnahme auf das Verfahren beschriebenen Ausgestaltungen.

Nach einem weiteren Ausführungsbeispiel wird ein LED-Konverter bereitgestellt, der den Wandler nach einem Ausführungsbeispiel umfasst. Der LED-Konverter kann als Konstantspannungsquelle ausgestaltet sein

Nach einem weiteren Ausführungsbeispiel wird ein Beleuchtungssystem angegeben, das den LED-Konverter und ein damit gekoppeltes Leuchtmittel umfasst. Das Leuchtmittel kann ein oder mehrere Leuchtdioden (LEDs) umfassen. Die LEDs können anorganische und/oder organische LEDs umfassen. Die LEDs können in ein LED-Modul integriert sein, das separat von dem LED-Konverter ausgeführt ist. Das Beleuchtungssystem kann weiterhin eine zentrale Steuerung umfassen, die eingerichtet ist, um Befehle an den LED-Konverter zu übermitteln oder vom LED-Konverter übertragene Signale auszuwerten.

Die Erfindung wird nachfolgend unter Bezugnahme auf die beigefügte Zeichnung anhand bevorzugter Ausführungsbeispiele näher erläutert.
FIG. 1 zeigt eine schematische Darstellung eines Beleuchtungssystems mit einem LED-Konverter nach einem Ausführungsbeispiel.
FIG. 2 zeigt ein Schaltbild eines Wandlers nach einem Ausführungsbeispiel.
FIG. 3 zeigt eine Last, die mit dem Wandler nach einem Ausführungsbeispiel mit Strom versorgt werden kann.
FIG. 4 illustriert Gatespannungen zur Halbbrückenansteuerung, die eine Steuereinrichtung des Wandlers nach einem Ausführungsbeispiel erzeugt.
FIG. 5 zeigt schematisch einen zeitabhängigen Strom durch einen Widerstand in einer primärseitigen Schaltung des Wandlers.
FIG. 6 illustriert die Abhängigkeit einer in der primärseitigen Schaltung des Wandlers erfassten Messgröße von einer Last am Ausgang des Wandlers.
FIG. 7 illustriert eine zu kompensierende Veränderung einer Ausgangsspannung des Wandlers als Funktion der Last.
FIG. 8 ist ein Flussdiagramm eines Verfahrens nach einem Ausführungsbeispiel.
FIG. 9 zeigt Ausgangsspannungen des Wandlers für eine unterschiedliche Anzahl von versorgten LEDs bei Anwendung des Verfahrens von FIG. 8.
FIG. 10 zeigt ein Schaltbild eines Wandlers nach einem weiteren Ausführungsbeispiel.
FIG. 11 illustriert eine Schaltfrequenz von Schaltern der Halbbrücke als Funktion der Zeit bei einem Wandler nach einem Ausführungsbeispiel.
FIG. 12 illustriert eine Welligkeit der Ausgangsspannung des Wandlers bei Korrektur einer Welligkeit der Busspannung.
FIG. 13 illustriert eine Verbesserung der elektromagnetischen Interferenz bei Wandlern nach Ausführungsbeispielen.
FIG. 14 illustriert Gatespannungen und eine niederfrequente Modulation, die eine Steuereinrichtung des Wandlers nach einem weiteren Ausführungsbeispiel zur Halbbrückensteuerung erzeugt

Die Merkmale der verschiedenen nachfolgend beschriebenen Ausführungsbeispiele können miteinander kombiniert werden, sofern dies in der nachfolgenden Beschreibung nicht ausdrücklich ausgeschlossen ist.

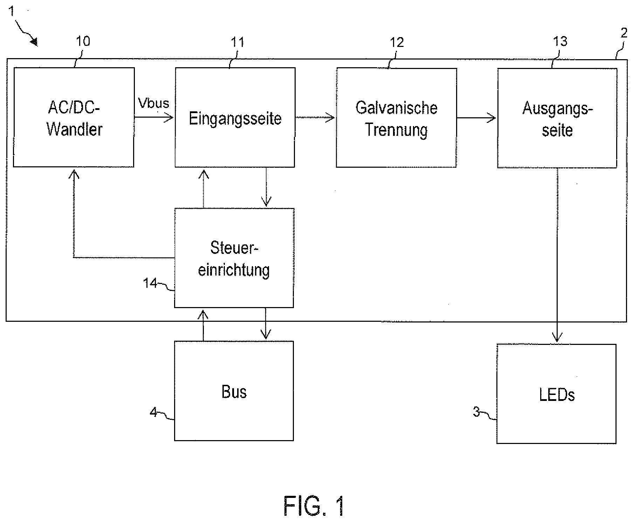

FIG. 1 zeigt ein Beleuchtungssystem 1, bei dem ein Betriebsgerät 2 nach einem Ausführungsbeispiel ein LED-Modul mit LEDs 3 mit Energie versorgt. Das Betriebsgerät 2 kann als LED-Konverter ausgestaltet sein. Der LED-Konverter 2 kann als Konstantspannungsquelle ausgebildet sein. Der LED-Konverter 2 kann eine Schnittstelle zur Kommunikation mit einem zentralen Steuergerät umfassen und eingerichtet sein, um über die Schnittstelle Befehle zu empfangen und um über die Schnittstelle Informationen über den Betriebszustand des LED-Konverters 2 und/oder des LED-Moduls mit den LEDs 3 auszugeben.

Der LED-Konverter 2 kann als SELV-Gerät ausgestaltet sein, bei der eine primärseitige Schaltung (beispielsweise eine nicht-SELV-Seite) und eine sekundärseitige Schaltung (beispielsweise eine SELV-Seite) galvanisch getrennt sind. Der LED-Konverter 2 kann einen AC/DC-Wandler 10 umfassen. Der AC/DC-Wandler 10 kann eingerichtet sein, um eingangsseitig mit einer Netzspannung gekoppelt zu werden. Der AC/DC-Wandler 10 kann eine so genannte Glättungsschaltung oder Schaltung zur Leistungsfaktorkorrektur (PFC) umfassen. Der AC/DC-Wandler 10 stellt eine Busspannung Vbus als Versorgungsspannung an einen Wandler bereit, der eine eingangs- bzw. primärseitige Schaltung 11 und eine davon galvanisch getrennte ausgangs- bzw. sekundärseitige Schaltung 13 aufweist. Eine galvanische Trennung wird durch einen Transformator 12 oder anderen Umsetzer erreicht.

Der LED-Konverter 2 ist so ausgestaltet und wird so betrieben, dass er als Konstantspannungsquelle wirkt. Um lastabhängige Veränderungen der Ausgangsspannung, die an die LEDs ausgegeben werden, wenigstens teilweise zu kompensieren, ist der LED-Konverter 2 eingerichtet, um eine Last zu detektieren, die über den Ausgangs des LED-Konverters 2 mit Energie versorgt wird. Bei der Lastdetektion kann die Last zumindest insoweit quantifiziert werden, dass lastabhängigen Veränderungen der Ausgangsspannung entgegengewirkt werden kann.

Der LED-Konverter 2 ist so ausgestaltet, dass die Detektion der Last, die mit dem Ausgang der Sekundärseite 13 verbunden ist, auf der Primärseite des Wandlers erfolgt. Wie noch ausführlicher beschrieben wird, wird in der primärseitigen Schaltung 11 eine Messgröße erfasst, die Informationen über die Last bereitstellt und eine Quantifizierung der Last erlaubt. Als Messgröße kann ein zeitlicher Mittelwert eines Stroms, der durch den Schalter auf einer Niederpotentialseite einer Halbbrücke der primärseitigen Schaltung 11 fließt, oder technisch äquivalent eine zu diesem Strom proportionale Spannung verwendet werden. Dieser Strom durch den Schalter auf der Niederpotentialseite der Halbbrücke kann beispielsweise über eine Spannung abgetastet werden, die über einem Messwiderstand abfällt, der zwischen den Schalter der Halbbrücke und ein Referenzpotential, insbesondere Masse, geschaltet ist. Als Messwiderstand kann ein Shunt-Widerstand der primärseitigen Schaltung verwendet werden, der für eine Sicherheitsabschaltung sowieso vorgesehen ist. Die Steuereinrichtung 14, die als integrierte Schaltung und insbesondere als ASIC ausgestaltet sein kann, verarbeitet die Messgröße und steuert den Betrieb des LED-Wandlers 2 so, dass lastabhängige Veränderungen der Ausgangsspannung wenigstens teilweise kompensiert werden.

Der LED-Konverter 2 ist auch so ausgestaltet, dass die Steuerung zur Kompensation lastabhängiger Veränderungen der Ausgangsspannung auf der Primärseite 11 erfolgt. Insbesondere kann die Steuereinrichtung 14 eine Taktung, mit der Schalter einer Halbbrücke geschaltet werden, abhängig von der in der primärseitigen Schaltung 11 erfassten Messgröße bzw. der von dieser repräsentierten Last einstellen. Die Steuereinrichtung 14 kann insbesondere eine Frequenz ändern, mit der die Schalter der Halbbrücke geschaltet werden.

Bei dem LED-Konverter 2 können lastabhängige Veränderungen der Ausgangsspannung reduziert werden, ohne dass eine Rückführung von gemessenen Werten über die SELV-Barriere erforderlich ist. Bei dem LED-Konverter 2 können lastabhängige Veränderungen der Ausgangsspannung reduziert werden, ohne dass dazu eine Steuerung von Leistungsschaltern auf der Sekundärseite erfolgen muss.

Die Steuereinrichtung 14 kann weitere Funktionen erfüllen. Die Steuereinrichtung 14 kann den Betrieb einer Komponente des LED-Konverters, insbesondere des AC/DC-Wandlers 10, basierend auf einer Busspannung Vbus regeln, die als Versorgungsspannung der primärseitigen Schaltung 11 zugeführt wird. Die Steuereinrichtung 14 kann insbesondere auch als Regler wirken, der die Busspannung Vbus stabil hält. Die Steuereinrichtung 14 kann automatisch eine Fehlererkennung durchführen, um einen offenen Ausgang und/oder einen Kurzschluss zu erkennen. Die Steuereinrichtung 14 kann eine entsprechende Sicherheitsabschaltung einleiten, wenn die Messgröße, die primärseitig erfasst wird, nicht in einem Intervall akzeptabler Werte für den Dauerbetrieb des LED-Konverters 2 liegt. Die Steuereinrichtung 14 kann alternativ oder zusätzlich andere Funktionen ausführen, beispielsweise einen Überstromschutz, bei dem durch Änderung der Taktung der Schalter der Halbbrücke der ausgangsseitige Strom verringert wird. Die Steuereinrichtung 14 kann auch herkömmliche Funktionen der Steuerung eines LED-Konverters ausführen, wie die Umsetzung von Befehlen, die über einen Bus 4 oder über eine Drahtlosschnittstelle empfangen werden.

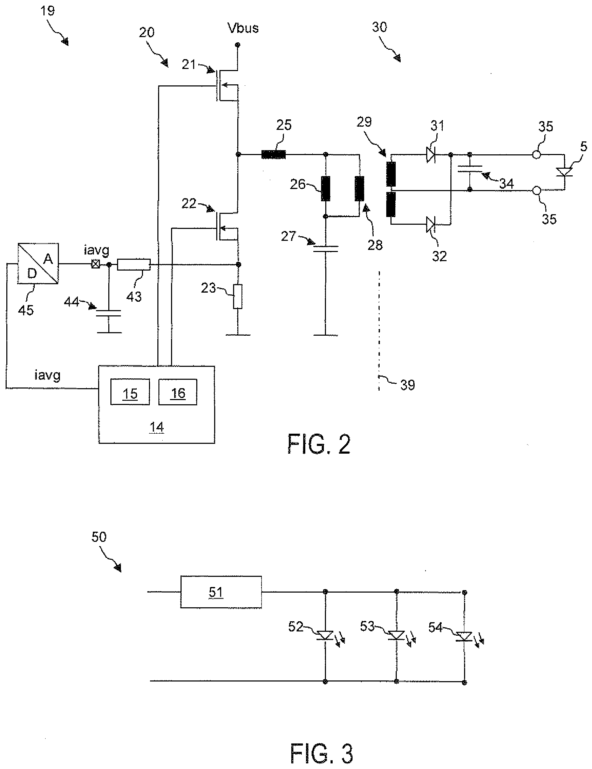

Die Funktionsweise und der Aufbau von Wandlern nach Ausführungsbeispielen werden unter Bezugnahme auf FIG. 2-14 näher beschrieben.

FIG. 2 ist ein Schaltbild eines Wandlers 19 nach einem Ausführungsbeispiel. Der Wandler 19 umfasst eine primärseitige Schaltung 20 und eine Sekundärseite 30. Es liegt Potentialtrennung zwischen der primärseitigen Schaltung 20 und der Sekundärseite 30 vor. Zur Trennung kann ein Transformator mit einer Primärspule 28 und einer Sekundärspule 29 vorgesehen sein. Der Transformator weist eine Hauptinduktivität auf, die auch als eine der Induktivitäten eines LLC-Resonanzkreises wirken kann. Diese ist in der FIG. 2 symbolisch als zweite Induktivität 26 dargestellt. Der Wandler 19 kann bei dem LED-Konverter 2 oder bei einem anderen Betriebsgerät zum Betreiben von LEDs verwendet werden, um die Funktionen der in FIG. 1 dargestellten primärseitigen Schaltung 11, der galvanischen Trennung 12 und der Sekundärseite 13 zu erfüllen. Der Wandler 19 wirkt als DC/DC-Wandler. Die Sekundärseite 30 kann ein SELV-Bereich sein, der durch eine SELV-Barriere 39 vom primärseitigen Bereich getrennt ist. Die primärseitige Schaltung 20 kann alle Komponenten beinhalten, die nicht zum SELV-Bereich gehören.

Die primärseitige Schaltung 20 umfasst einen LLC-Resonanzkreis, der als Serienresonanzkreis ausgestaltet ist. Der LLC-Resonanzkreis weist eine erste Induktivität 25, eine zweite Induktivität 26 und eine Kapazität 27 in einer Serienschaltung auf. Gemäß der allgemeinen Terminologie in diesem technischen Gebiet wird der Begriff "LLC-Resonanzkreis" bzw. "LLC-Resonanzwandler" so verwendet, dass damit ein Resonanzkreis mit zwei Induktivitäten und einer Kapazität bzw. ein entsprechender Wandler bezeichnet wird, wobei es nicht darauf ankommt, ob die Induktivität 26 zwischen die Induktivität 25 und den Kondensator 27 geschaltet ist oder der Kondensator 27 zwischen die induktiven Elemente 25 und 26 geschaltet ist. Das zweite induktive Element 26 repräsentiert wie gesagt die Hauptinduktivität der Primärspule 28 des Transformators. Das zweite induktive Element 26 kann die Haupt-Induktivität des Resonanzkreises sein, deren Induktivität größer als die erste Induktivität 25 ist. Auch die erste Induktivität 25 kann in den Transformator integriert sein und beispielsweise eine Streuinduktivität sein. Alternativ kann auch eine zusätzliche Induktivität zusätzlich zu der Primärspule 28 des Transformators angeordnet werden und auch als eine der zwei Induktivitäten des LLC-Resonanzkreises wirken. Andere Ausgestaltungen des LLC-Resonanzkreises sind ebenfalls möglich.

Die primärseitige Schaltung 20 umfasst eine Halbbrücke mit einem ersten Schalter 21, der ein Leistungsschalter sein kann, und einem zweiten Schalter 22, der ein Leistungsschalter sein kann. Der erste Schalter 21 und der zweite Schalter 22 können identisch sein, und die Halbbrücke kann als symmetrische Halbbrücke ausgebildet sein. Die Schalter können als Feldeffekttransistoren, beispielsweise als MOSFETs ausgebildet sein. Der Resonanzkreis ist mit einem Knoten zwischen dem ersten Schalter 21 und dem zweiten Schalter 22 verbunden. Der Resonanzkreis ist mit der Mitte der Halbbrücke zwischen den zwei Schaltern 21 und 22 verbunden. Ein erster Anschluss der ersten induktivität 25 des Resonanzkreises kann mit dem Knoten zwischen dem ersten Schalter 21 und dem zweiten Schalter 22 der Halbbrückenschaltung verbunden sein. Ein zweiter Anschluss der ersten Induktivität 25 kann mit einem ersten Anschluss der zweiten Induktivität 26 des Resonanzkreises verbunden sein. Ein zweiter Anschluss der zweiten Induktivität 26 des Resonanzkreises kann mit einem ersten Anschluss der Kapazität 27 verbunden sein.

Im Betrieb des Wandlers 19 steuert die Steuereinrichtung 14 den ersten Schalter 21 und den zweiten Schalter 22. Dabei kann jeder der Schalter jeweils mit derselben vorgegebenen Frequenz geschaltet werden. Die Steuereinrichtung 14 steuert den ersten Schalter 21 und den zweiten Schalter 22 so, dass immer nur einer der beiden Schalter leitend geschaltet ist. Der erste Schalter 21 und der zweite Schalter 22 werden von der Steuereinrichtung 14 wechselseitig getaktet betrieben. Die Totzeit zwischen dem Ausschalten eines Schalters und dem Einschalten des jeweils anderen Schalters kann klein sein, insbesondere viel kleiner als das inverse der Schaltfrequenz.

Die primärseitige Schaltung 20 ist so ausgestaltet, dass sie eine Messgröße erfasst, die einen zeitlichen Mittelwert eines Stroms angibt, der von dem LLC-Resonanzkreis zu Masse fließt, wenn der zweite Schalter 22 leitend geschaltet ist, oder die zu einem derartigen zeitlichen Mittelwert des Stroms proportional ist. Die primärseitige Schaltung 20 kann einen entsprechenden Leiter bzw. Anschluss aufweisen, mit dem die entsprechende Messgröße an die Steuereinrichtung 14 bereitgestellt wird. Wie noch ausführlicher beschrieben wird, erlaubt eine derartige Messgröße die Ermittlung der Last, die mit dem Ausgang der Sekundärseite 30 verbunden ist

Informationen über die Last 5 am Ausgang 35 des Wandlers werden basierend auf der in der primärseitigen Schaltung erfassten Messgröße iavg abgeleitet. Die Messgröße, die proportional zu dem Mittelwert des Stroms durch den zweiten Schalter 22 ist, kann bereitgestellt werden, indem die über den Shunt-Widerstand 23 abfallende Spannung durch ein Tiefpassfilter gefiltert wird. Das Tiefpassfilter kann beispielsweise einen Widerstand 43 und einen Kondensator 44 zur zeitlichen Mittelung umfassen. Die Kapazität des Kondensators 44 ist so gewählt, dass die Grenzfrequenz des Tiefpassfilters zur Mittelung viel kleiner als die Frequenz ist, mit der die Schalter 21, 22 der Halbbrücke getaktet geschaltet werden. Die in der primärseitigen Schaltung erfasste Messgröße iavg wird der Steuereinrichtung 14 zugeführt. Die in der primärseitigen Schaltung erfasste Messgröße iavg kann über einen A/D-Wandler 45 A/D-gewandelt werden, bevor sie der Steuereinrichtung 14 zugeführt wird.

Bei stabiler Versorgungsspannung Vbus der primärseitigen Schaltung 20 steht die primärseitig erfasste Messgröße iavg in einer direkten Beziehung zur Last 5 am Ausgang 35 der Sekundärseite. Dies erlaubt eine Detektion der Last 5 basierend auf der Messgröße. Die Steuereinrichtung 14 dient auch als Regler, der die Versorgungsspannung Vbus stabil hält und dazu entsprechende Stellbefehle an einen der primärseitigen Schaltung 14 vorgeschalteten Teil des LED-Konverters, beispielsweise an den AC/DC-Wandler, ausgibt. Falls sich die Last 5 beispielsweise aufgrund einer Änderung der Anzahl von LEDs ändert, kann durch eine entsprechende Änderung der Taktung der Halbbrücke eine Kompensation durchgeführt werden, bei der lastabhängige Effekte am Ausgang 35 der Sekundärseite wenigstens teilweise kompensiert werden. Der Wandler 19 ist so ausgestaltet, dass die Ausgangsspannung am Ausgang 35 der Sekundärseite 30 in einer vorgegebenen Beziehung zur Versorgungsspannung Vbus steht, die der primärseitigen Schaltung 20 zugeführt wird. Diese Beziehung hängt auch in dem Zustand, in dem lastabhängige Effekte noch nicht kompensiert sind, nur schwach von der Last ab. Daher ist die Messgröße iavg zur Detektion der Last besonders geeignet.

Andere Ausgestaltungen zur Ermittlung der Messgröße, die proportional zu einem durch den zweiten Schalter 22 fließenden Strom ist, sind ebenfalls möglich. Beispielsweise muss die zu dem Strom durch den Schalter 22 proportionale Spannung nicht über den Shunt-Widerstand 23 abgegriffen werden, sondern es kann auch ein separater Messwiderstand vorgesehen sein, der zwischen den zweiten Schalter 22 und Masse geschaltet ist. Eine zeitliche Mittelung des Stroms durch den zweiten Schalter 22 muss nicht am analogen Signal erfolgen, sondern kann auch nach A/D-Wandlung, insbesondere von der Steuereinrichtung 14 selbst vorgenommen werden. Dazu kann der im Niederpotentialzweig der Halbbrücke fließende Strom mit einer Rate A/D-gewandelt werden, die höher als die Schaltfrequenz der Schalter 21, 22 der Halbbrücke ist, und die Steuereinrichtung 14 kann das abgetastete Signal zeitlich mitteln, um iavg zu bestimmen.

Um lastabhängige Änderungen der Ausgangsspannung wenigstens teilweise zu kompensieren, kann die Steuereinrichtung 14 eine entsprechende Logik 15 aufweisen, mit der abhängig von der primärseitig erfassten Messgröße neue Parameter für die Steuerung der Halbbrücke ermittelt werden. Die Logik 15 kann eine entsprechende rechnerische Vorschrift auswerten, die die primärseitig erfasste Messgröße in Beziehung zu einer neuen Frequenz oder einer Frequenzverschiebung für das Schalten der Schalter 21, 22 der Halbbrücke setzt. Alternativ oder zusätzlich kann die Steuereinrichtung 14 einen Speicher 16 mit einer Wertetabelle umfassen, wobei die Logik 15 durch Wertetabellenaufruf abhängig von der Messgröße eine neue Frequenz oder eine Frequenzverschiebung für das Schalten der Schalter 21, 22 der Halbbrücke ermittelt.

Die Sekundärseite 30 weist einen der Sekundärspule 29 nachgeschalteten Gleichrichter auf, der beispielsweise durch eine erste Diode 31 und eine zweite Diode 32 gebildet sein kann. Eine Mitte der Sekundärspule 29 kann mit einem Ausgang der sekundärseitigen Schaltung gekoppelt sein. Enden der Sekundärspule 29 können über die Dioden 31 und 32 mit dem Ausgang 35 gekoppelt sein. Ein Ladekondensator 34 kann zwischen die Ausgänge des Gleichrichters geschaltet sein.

Eine mit dem Ausgang 35 der sekundärseitigen Schaltung 30 bzw. des Wandlers verbundene Last 5 kann ein LED oder mehrere LEDs umfassen. Da der Wandler 19 als Konstantspannungsquelle betrieben wird, kann die Last 5 so ausgestaltet sein, dass sie neben den LEDs weitere Komponenten aufweist, um aus der vom Ausgang 35 gelieferten Konstantspannung einen entsprechenden vorgegebenen Betriebsstrom für die LEDs zu erzeugen.

FIG. 3 illustriert schematisch die Ausgestaltung der Last 50, die als Last 5 mit dem Ausgang des Wandlers 19 verbunden werden kann. Die Last 50 weist mehrere LEDs 52-54 und eine Elektronik 51 auf. Die mehreren LEDs 52-54 können beispielsweise in einer Reihenschaltung oder auch wie in Fig. 3 dargestellt in einer Parallelschaltung oder auch in einer Kombination aus Reihen- und Parallelschaltung angeordnet sein. Die Elektronik 51 kann so ausgestaltet sein, dass sie die Ausgangsspannung des Wandlers 20 als Betriebsspannung empfängt und die LEDs 52-54 mit einem vorgegebenen Betriebsstrom versorgt.

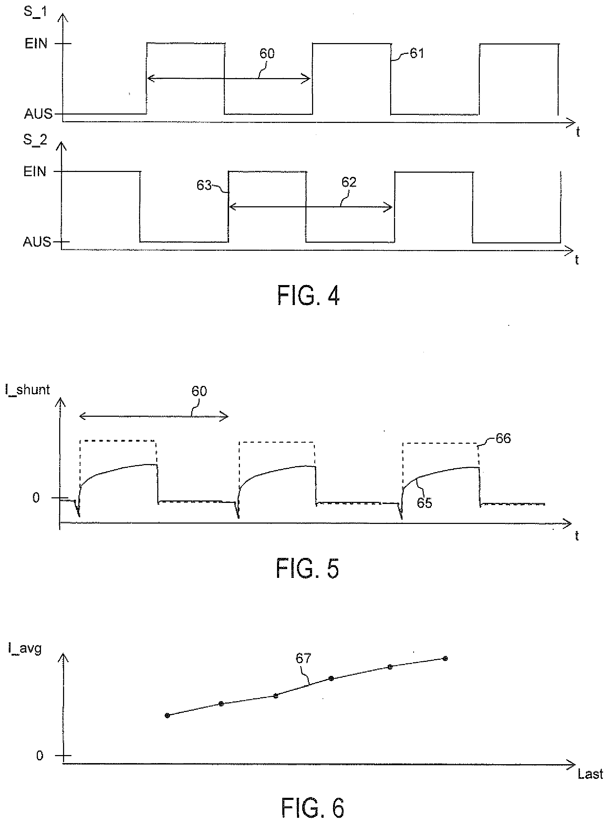

Unter Bezugnahme auf FIG. 4-9 wird die Funktionsweise und der Betrieb des Wandlers nach Ausführungsbeispielen näher beschrieben.

FIG. 4 zeigt schematisch die von der Steuereinrichtung 14 an den ersten Schalter 21 angelegte Gatespannung 61 und die an den zweiten Schalter 22 angelegten Gatespannung 63, mit der der entsprechende Schalter geschaltet wird. Beide Schalter werden periodisch mit derselben Frequenz geschaltet, wobei die Schalter wechselseitig getaktet sind. Eine Periodendauer 60 der Gatespannung 61 für den ersten Schalter 21 und eine Periodendauer 62 der Gatespannung 63 für den zweiten Schalter 22, die jeweils als Zeit zwischen aufeinanderfolgenden steigenden Flanken der Gatespannung definiert sein kann, ist für beide Schalter gleich. Die Schalter 21 und 22 werden so wechselseitig getaktet geschaltet, dass immer nur maximal einer der Schalter leitend geschaltet ist. Eine Totzeit zwischen dem Ausschalten eines Schalters und dem Einschalten des anderen Schalters kann klein sein im Vergleich zum Inversen der Schaltfrequenz, d.h. klein im Vergleich zu der Periodendauer 60, 62.

Wird im Betrieb die Taktung der Schalter 21, 22 zur Kompensation lastabhängiger Effekte verändert, kann dies auf verschiedene Weisen geschehen. Bei einer Ausgestaltung kann die Periodendauer 60, 62 entsprechend geändert werden, wobei das Verhältnis zwischen Ein- und Aus-Zeit konstant gehalten wird. In diesem Fall werden Ein- und Aus-Zeit für jeden der Schalter entsprechend verlängert oder verkürzt, abhängig davon, ob die Frequenz erniedrigt oder erhöht wird. Bei einer weiteren Ausgestaltung kann die Ein -Zeit konstant gehalten werden, während die Periodendauer 60, 62 und somit die Aus-Zeit verlängert wird, so dass die Frequenz einen neuen Wert annimmt, der eine konsistente Ausgangsspannung für die detektierte Last sicherstellt.

Die Frequenz, mit der die Schalter 21, 22 geschaltet werden, kann abhängig von den Eigenschaften und insbesondere der Eigenfrequenz des LLC-Serienresonanzkreises gewählt sein. Die Schaltfrequenz kann so gewählt sein, dass die Periodendauer 60, 62 näherungsweise der Periodendauer einer Eigenschwingung des LLC-Resonanzkreises entspricht. Das heißt, jeder der Schalter kann jedenfalls in einem anfänglichen Betriebszustand so geschaltet werden, dass er jeweils für eine Zeitdauer im EIN-Zustand ist, die näherungsweise der halben Periodendauer einer Eigenschwingung des LLC-Resonanzkreises entspricht. Ausgehend von einem solchen Anfangswert für die Taktung der Schalter 21, 22 kann die Schaltfrequenz gemäß der primärseitig durch die Messgröße iavg detektierten Last angepasst werden.

FIG. 5 zeigt schematisch den Strom als Funktion der Zeit, der in der Niederpotentialseite der Halbbrücke fließt, wenn der zweite Schalter 22 zwischen dem LLC-Resonanzkreis und Masse leitend geschaltet ist. In den Halbperioden der Schwingung des LLC-Resonanzkreises, in denen der zweite Schalter 22 leitend geschaltet ist, fließt ein entsprechender Strom durch den zweiten Schalter 22 und durch den Shunt-Widerstand 23. Dies würde entsprechend gelten, wenn ein von dem Shunt-Widerstand 23 verschiedener, separater Messwiderstand eingesetzt wird. FIG. 5 ist nur eine vereinfachte Darstellung. Zu Beginn des Einschaltens des zweiten Schalters 22 fließt anfangs typischerweise ein negativer Strom. Aufgrund des resonanten Ausgangskreises stellt sich auch eine gewisse Phasenverschiebung zwischen Spannung und Strom ein.

Schematisch dargestellt ist der Strom 65, der für eine erste Last resultiert, und der Strom 66, der für eine zweite Last resultiert. Die Busspannung Vbus, die die primärseitige Schaltung versorgt, wird stabil gehalten. Aus dem zeitlichen Mittelwert des Stroms 65 bzw. des Stroms 66 kann somit auf die übertragene Leistung bzw. die mit dem Ausgang der Sekundärseite verbundene Last rückgeschlossen werden.

FIG. 6 illustriert schematisch die funktionale Abhängigkeit der Messgröße 67, die zum zeitlichen Mittelwert I_avg des Stroms durch den zweiten Schalter 22 der Halbbrücke proportional ist, als Funktion der Last. Die Lastabhängigkeit der Messgröße erlaubt, die Last abhängig von der erfassten Messgröße zu bestimmen. Die Steuereinrichtung 14 des Wandlers kann automatisch neue Parameter für die Ansteuerung der Halbbrücke bestimmen, beispielsweise eine neue Frequenz, mit der die Schalter 21, 22 geschaltet werden. Dadurch kann eine konsistente Ausgangsspannung bereitgestellt werden, auch wenn unterschiedliche Lasten, beispielsweise mit unterschiedlicher Anzahl von LEDs, mit dem Wandler 19 verbunden werden. Der Wandler detektiert die Last automa-tisch und selbständig und passt seinen Betrieb entsprechend an.

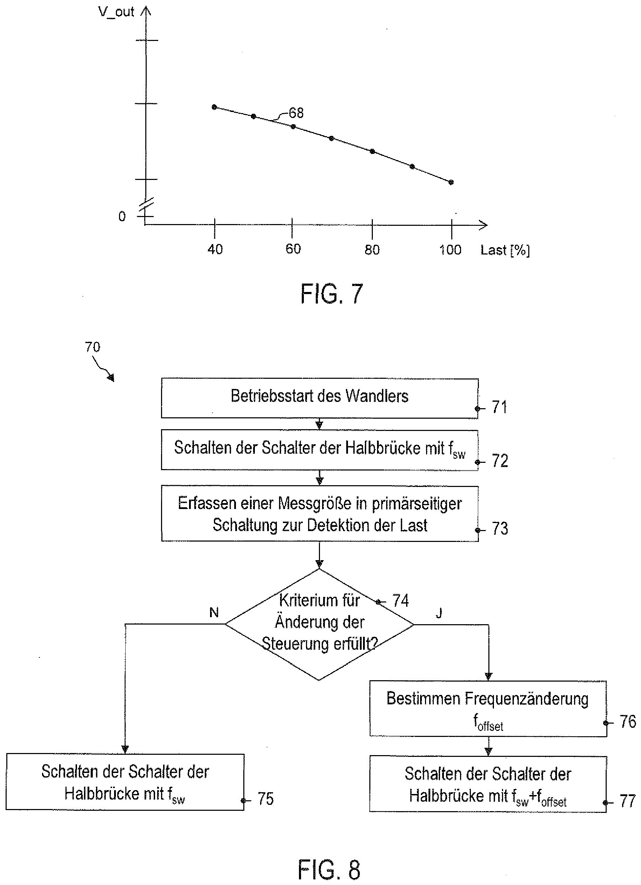

FIG. 7 illustriert für ein beispielhaftes System die Lastabhängigkeit, die die Ausgangsspannung 68 aufweisen würde, wenn die Halbbrücke des Wandlers für unterschiedliche Lasten immer mit derselben Frequenz geschaltet werden würde. Bei dem dargestellten Beispiel würde die Ausgangsspannung bei einer Verringerung der Last von einem Ausgangswert (100 %) auf 40 % des Ausgangswerts um 4 % zunehmen. Beispielhaft für eine derartige Veränderung der Last ist die Verwendung einer unterschiedlichen Anzahl von LEDs. Die Anzahl kann sich auch im Betrieb ändern, beispielsweise bei Ausfall von LEDs.

Die funktionale Abhängigkeit der Ausgangsspannung 68 von der Last ist beispielsweise aus der theoretischen Beschreibung des LLC-Resonanzwandlers bekannt und/oder kann durch Messungen ermittelt werden.

Bei LLC-Resonanzwandlern und Verfahren nach Ausführungsbeispielen wird basierend auf der primärseitig erfassten Messgröße die Last detektiert und die Steuerung der Halbbrücke so angepasst, dass der in FIG. 7 dargestellten lastabhängigen Änderung der Ausgangsspannung entgegengewirkt wird. Dies kann beispielsweise durch Änderung der Frequenz erfolgen, mit der die Schalter der Halbbrücke geschaltet werden. Eine Referenzfrequenz für den Betrieb der Schaltbrücke kann so gewählt sein, dass für eine Referenz-Last eine vorgegebene Ziel-Ausgangsspannung erreicht wird. Würde sich nach der Lastabhängigkeit der Ausgangsspannung 68 die Ausgangsspannung im Vergleich zur Ziel-Ausgangsspannung erhöhen, wenn die Halbbrücke mit der Referenzfrequenz betrieben werden würde, kann die Schaltfrequenz gegenüber der Referenzfrequenz geändert werden. Die neue Schaltfrequenz kann so gewählt werden, dass sich die Ausgangsspannung für die detektierte Last wieder der Ziel-Ausgangsspannung nähert bzw. diesen Wert annimmt. Die neue Schaltfrequenz kann hierfür beispielsweise so gewählt werden, dass der Betrieb des Wandlers bei einer Frequenz erfolgt, die weiter von der Frequenz entfernt ist, bei der die Übertragungsfunktion bzw. Verstärkung des Wandlers für die detektierte Last ihr Maximum aufweist. Der Betriebspunkt des Wandlers kann somit auf der frequenzabhängigen Kurve der Übertragungsfunktion bzw. Verstärkung des Wandlers so verschoben werden, dass bei der detektierten Last die Ausgangsspannung wieder näher an die Ziel-Ausgangsspannung gebracht wird, der lastabhängigen Erhöhung der Ausgangsspannung also entgegengewirkt wird. Würde sich nach der Lastabhängigkeit der Ausgangsspannung 68 die Ausgangsspannung im Vergleich zur Ziel-Ausgangsspannung erniedrigen, wenn die Halbbrücke mit der Referenzfrequenz betrieben werden würde, kann die Schaltfrequenz gegenüber der Referenzfrequenz geändert werden. Die neue Schaltfrequenz kann so gewählt werden, dass sich die Ausgangsspannung für die detektierte Last wieder der Ziel-Ausgangsspannung nähert bzw. diesen Wert annimmt. Die neue Schaltfrequenz kann hierfür beispielsweise so gewählt werden, dass der Betrieb des Wandlers bei einer Frequenz erfolgt, die näher an der Frequenz liegt, bei der die Übertragungsfunktion bzw. Verstärkung des Wandlers für die detektierte Last ihr Maximum aufweist. Der Betriebspunkt des Wandlers kann somit auf der frequenzabhängigen Kurve der Übertragungsfunktion bzw. Verstärkung des Wandlers so verschoben werden, dass bei der detektierten Last die Ausgangsspannung wieder näher an die Ziel-Ausgangsspannung gebracht wird, der lastabhängigen Verringerung der Ausgangsspannung also entgegengewirkt wird.

Die Wahl der neuen Schaltfrequenz abhängig von der primärseitig erfassten Messgröße bzw. der dadurch angezeigten Last kann von der Steuereinrichtung 14 automatisch durchgeführt werden. Dazu kann beispielsweise eine rechnerische Auswertung einer Funktion erfolgen, die die neue Frequenz oder eine Frequenzverschiebung gegenüber einer Referenzfrequenz abhängig vom Messwert angibt. Die Funktion kann linear im Messwert sein. Es kann auch Aufruf einer Wertetabelle erfolgen, die für unterschiedliche Messgrößen iavg jeweils die zugeordnete neue Schaltfrequenz oder eine Frequenzverschiebung gegenüber einer Referenzfrequenz angibt.

FIG. 8 ist ein Flussdiagramm eines Verfahrens 70, das von der Steuereinrichtung 14 zum Steuern eines Wandlers durchgeführt werden kann. Der Wandler kann als Wandler nach einem Ausführungsbeispiel ausgestaltet sein. Der Wandler weist einen LLC-Resonanzkreis mit Halbbrückenansteuerung auf. Der Wandler weist eine primärseitige Schaltung und eine davon galvanisch getrennte Sekundärseite auf. Die primärseitige Schaltung kann beispielsweise ein nicht-SELV-Bereich des Wandlers sein und die Sekundärseite kann der SELV-Bereich des Wandlers sein.

Bei 71 wird der Betrieb des Wandlers gestartet. Nach dem Betriebsstart werden bei 72 die Schalter der Halbbrücke des Wandlers mit einer vorgegebenen Referenzfrequenz f_{SW} getaktet geschaltet. Diese Frequenz kann auf die Eigenfrequenz des LLC-Resonanzkreises abgestimmt sein.

Bei 73 wird in der primärseitigen Schaltung eine Messgröße erfasst, um die mit dem Ausgang der Sekundärseite verbundene Last zu detektieren. Dies kann erfolgen, während die Steuerung der Halbbrücke noch basierend auf "Standard"-Parametern erfolgt, wobei beispielsweise die Schalter der Halbbrücke des Wandlers mit der vorgegebenen Referenzfrequenz f_{SW} getaktet geschaltet werden.

Bei 74 kann überprüft werden, ob ein Kriterium erfüllt ist, bei dem die Anpassung der Steuerung der Halbbrücke erfolgen soll. Das Kriterium kann beispielsweise beinhalten, ob die primärseitig erfasste Messgröße in einem bestimmten Werteintervall liegt, so dass die Last einen Wert aufweist, bei dem auch die Steuerung der Halbbrücke mit den "Standard"-Parametern eine Ausgangsspannung sicherstellt, die ausreichend nahe bei einer Ziel-Ausgangsspannung liegt. Falls keine Anpassung der Steuerung der Halbbrücke erfolgen soll, kann bei 75 während des fortgesetzten Betriebs des Wandlers bzw. des LED-Konverters, in dem der Wandler eingesetzt wird, die Ansteuerung der Halbbrücke basierend auf den "Standard"-Parametern fortgesetzt werden. Insbesondere können die Schalter der Halbbrücke weiterhin mit der Referenzfrequenz f_{SW} getaktet geschaltet werden.

Falls bei 74 ermittelt wird, dass die Ansteuerung der Halbbrücke geändert werden soll, können neue Parameter für die Ansteuerung der Halbbrücke ermittelt werden. Beispielsweise kann bei 76 eine neue Frequenz bestimmt werden, mit der die Schalter der Halbbrücke geschaltet werden sollen. Dazu kann eine Frequenzverschiebung f_{offset} bestimmt werden, um die die Frequenz gegenüber der Referenzfrequenz geändert werden soll, oder es kann gleich die neue Schaltfrequenz ermittelt werden. Alternativ oder zusätzlich können neue Werte für die Ein- und Auszeit jedes Schalters rechnerisch ermittelt oder aus einer Wertetabelle ausgelesen werden. Wie erwähnt ist die Aus-Zeit jedes Schalters typischerweise um die Totzeit länger als die Ein-Zeit.

Bei 77 wird die Steuerung der Halbbrücke angepasst. Die Schalter können basierend auf den bei 76 ermittelten neuen Parametern für die Steuerung der Halbbrücke geschaltet werden.

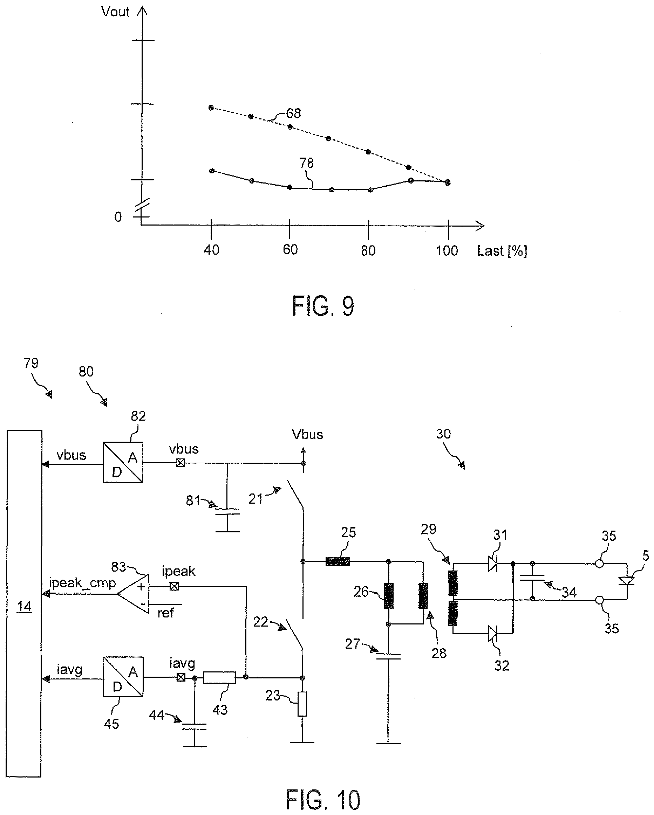

FIG. 9 illustriert die Wirkung von Verfahren und Vorrichtungen nach Ausführungsbeispielen, bei denen die Last primärseitig detektiert und die Steuerung der Halbbrücke entsprechend angepasst ist.

Die Ausgangsspannung 78 weist aufgrund der Kompensation, die lastabhängig durchgeführt wird, nur noch eine schwächere Lastabhängigkeit auf als ohne Kompensation. Die in FIG. 9 dargestellten Daten 78 wurden für ein System ermittelt, bei dem die Anpassung der Steuerung der Halbbrücke basierend auf einem einfachen Modell erfolgt, das linear in der Messgröße bzw. Last ist. Durch Verwendung von Wertetabellen und/oder Berücksichtigung höherer Ordnungen kann die Lastabhängigkeit der Ausgangsspannung weiter verringert werden.

Sogar für die in FIG. 9 dargestellten Daten 78, bei denen ein lineares Modell verwendet wurde, variiert die Ausgangsspannung bei Verringerung der Last von einem Ausgangswert (100 %) auf 40 % des Ausgangswerts um weniger als ±0,8 %. Dies stellt eine wesentliche Reduzierung im Vergleich zur Variation um 4 % beim Betrieb ohne Kompensation dar, der durch Linie 68 dargestellt ist.

Weitere Steuerfunktionalitäten und/oder Verarbeitungsschritte können von der Steuereinrichtung 14 des Wandlers nach Ausführungsbeispielen durchgeführt werden werden. Beispielsweise kann die Steuereinrichtung 14 eine Versorgungsspannung Vbus der primärseitigen Schaltung des Wandlers erfassen. Ein AC/DC-Wandler und/oder eine Glättungsschaltung und/oder eine Schaltung zur Leistungsfaktorkorrektur können basierend auf der Busspannung als Regelgröße geregelt werden. Auf diese Weise kann die Busspannung stabil gehalten werden.

Darüber hinaus kann die Steuereinrichtung 14 auch so ausgestaltet sein, dass die Steuerung der Halbbrücke abhängig von einer Zeitabhängigkeit der Versorgungsspannung Vbus der primärseitigen Schaltung, insbesondere abhängig von einer Welligkeit (Spannungsrippel) dieser Spannung angepasst wird.

FIG. 10 ist ein Schaltbild eines Wandlers 79 nach einem weiteren Ausführungsbeispiel. Elemente oder Einrichtungen, die in Ausgestaltung und Funktion Elementen oder Einrichtungen entsprechen, die bereits unter Bezugnahme auf FIG. 1-9 beschrieben wurden, sind mit denselben Bezugszeichen bezeichnet.

Der Wandler 79 weist eine primärseitige Schaltung 80 mit einer getaktet betriebenen Halbbrücke und einem LLC-Resonanzkreis auf. Die Steuereinrichtung 14 detektiert basierend auf der primärseitig erfassten Messgröße iavg die Last und passt die Steuerung der Halbbrücke mit den Schaltern 21, 22 abhängig von der Last an.

Die Steuereinrichtung 14 kann auch eingerichtet sein, um einen Überstromschutz zu bieten. Ein Peakwert des Stroms durch den Shunt-Widerstand oder durch einen anderen Messwiderstand kann überwacht werden, um selektiv einen Überstromschutz zu aktivieren. Der Peakwert kann einem Schwellenwertvergleich unterzogen werden. Dazu kann beispielsweise der Peakwert ipeak des Stroms durch den Shunt-Widerstand mit einem Schwellenwert ref verglichen werden. Dies kann einfach durch einen Komparator 83 realisiert werden. Ein Ausgangssignal ipeak_cmp des Komparators kann der Steuereinrichtung 14 zugeführt werden. Abhängig von dem Ergebnis des Schwellenwertvergleichs des Peakstroms kann der Überstromschutz aktiviert werden. Dazu kann die Steuereinrichtung 14 die Frequenz, mit der die Schalter 21, 22 der Halbbrücke geschaltet werden, so ändern, dass die Übertragungsfunktion bzw. Verstärkung des Wandlers einen kleineren Wert annimmt. Die Frequenz kann so geändert werden, dass man sich von einem Maximum der Verstärkungskurve wegbewegt. Die Änderung der Frequenz zum Überstromschutz kann abhängig von der jeweils detektierten Last erfolgen, um sicherzustellen, dass für die der jeweils detektierten Last entsprechende frequenzabhängige Verstärkungskurve eine gewünschte Verringerung der übertragenen Leistung und/oder des Ausgangsstroms erreicht wird. Anstelle des Komparators 83 kann auch ein rechnerischer Vergleich des Peakwerts des Stroms mit der Referenz in der digitalen Domäne durch die Steuereinrichtung 14 erfolgen.

Die Steuereinrichtung 14 kann auch eine Regelung auf der Versorgungsspannung Vbus der primärseitigen Schaltung durchführen. Die Versorgungsspannung Vbus kann über ein Tiefpassfilter mit einem Kondensator 81 oder beispielsweise auch durch ein RC-Glied und einen A/D-Wandler 82 der Steuereinrichtung 14 zugeführt werden. Die Kapazität des Kondensators 81 kann so gewählt sein, dass eine Grenzfrequenz des Tiefpassfilters größer, insbesondere viel größer als die Welligkeit bzw. Spannungsrippel der Versorgungsspannung Vbus sind. Diese weisen typischerweise eine Frequenz von näherungsweise 100 Hz auf. Die Versorgungsspannung Vbus, die auch als Busspannung bezeichnet wird, wird von der Steuereinrichtung 14 also so erfasst, dass die Steuereinrichtung 14 die Welligkeit bzw. Spannungsrippel der Versorgungsspannung Vbus detektiert. Die Steuereinrichtung 14 tastet die Versorgungsspannung mit einer Rate ab, die größer, insbesondere viel größer als die Periode der Spannungsrippel der Versorgungsspannung Vbus sein kann. Die Steuereinrichtung 14 kann den AC/DC-Wandler 10, die Glättungsschaltung bzw. Schaltung zur Leistungsfaktorkorrektur so steuern, dass der zeitliche Mittelwert des Versorgungsspannung Vbus auf einen Sollwert geregelt wird.

Zusätzlich kann die Steuereinrichtung 14 die Steuerung der Halbbrücke abhängig von der Versorgungsspannung Vbus der primärseitigen Schaltung 80 zeitabhängig anpassen. Beispielsweise kann die die Steuerung der Halbbrücke abhängig von der Welligkeit der Versorgungsspannung zeitabhängig angepasst werden. Die Frequenz, mit der die Schalter der Halbbrücke in den EIN-Zustand geschaltet werden, kann abhängig von der Welligkeit der Versorgungsspannung zeitabhängig, insbesondere periodisch verändert werden. Auch wenn aufgrund der endlichen Periodendauer 60, 62 eines Schaltzyklus, wie sie in FIG. 4 illustriert ist, eine kontinuierliche Anpassung der Frequenz nicht möglich ist, kann aufgrund des großen Unterschieds zwischen der Periode der Spannungsrippel in der Versorgungsspannung Vbus und der Periodendauer 60, 62 eines Schaltzyklus die Periodendauer 60, 62 für die Taktung der Schalter der Halbbrücke quasi-kontinuierlich gemäß der Spannungsrippel der Versorgungsspannung nachgeführt werden. So kann beispielsweise jeweils nach einigen Schaltzyklen oder nach einem Schaltzyklus ein neuer Wert für die Periodendauer 60, 62 für die Taktung der Schalter der Halbbrücke ermittelt werden. Typischerweise liegt eine Trennung von Zeitskalen derart vor, dass in einer Periode von Spannungsrippeln der Versorgungsspannung, die eine Frequenz von 100 Hz aufweisen können, mehrere hundert oder sogar einige Tausend Schaltzyklen der Schalter der Halbbrücke durchlaufen werden.

Die Frequenz der Schalter der Halbbrücke wird dabei so angepasst, dass bei einem lokalen Maximum der Spannungsrippel der Versorgungsspannung Vbus die Verstärkung des Wandlers erniedrigt und bei einem lokalen Minimum der Spannungsrippel der Versorgungsspannung die Verstärkung des Wandlers erhöht werden kann. Die Schwankungen der Versorgungsspannung können somit jedenfalls in gewissem Umfang ausgeglichen werden. Die Welligkeit der Ausgangsspannung bzw. des Ausgangsstroms des Wandlers kann verringert werden.

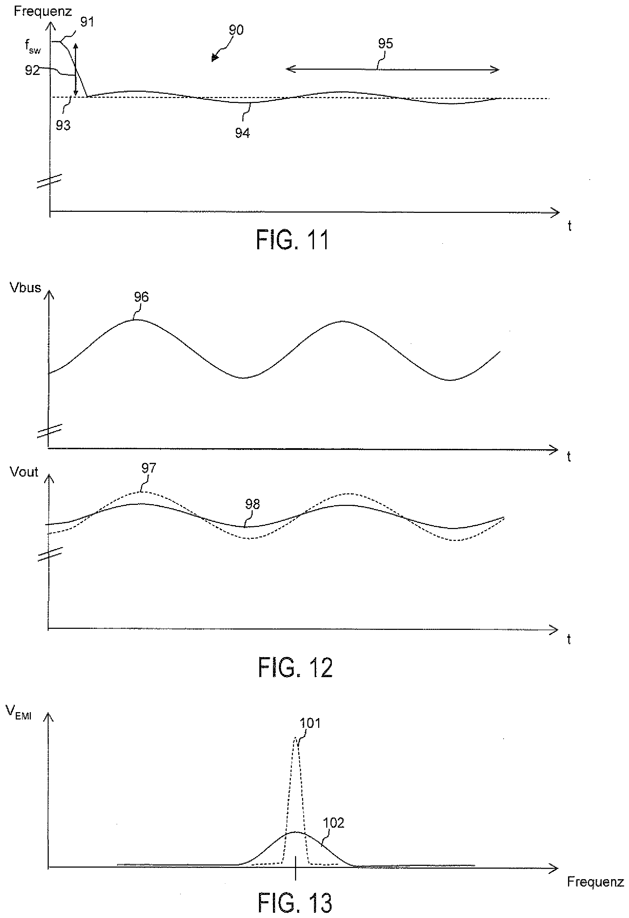

FIG. 11 veranschaulicht einen typischen Verlauf 90 einer Schaltfrequenz der Schalter der Halbbrücke während des Betriebs des Wandlers 79.

Anfangs können die Schalter mit einer Referenzfrequenz f_{SW} 91 geschaltet werden. In diesem Betriebszustand kann primärseitig die Messgröße erfasst werden, die die Detektion der Last am Ausgang der Sekundärseite erlaubt. Abhängig von der Messgröße bzw. der entsprechenden Last kann die Steuerung der Halbbrücke so angepasst werden, dass die Frequenz, mit der die Schalter geschaltet werden, um eine Frequenzdifferenz 92 verschoben wird, die positiv oder negativ sein kann. Die Frequenz kann dabei kontinuierlich oder quasi-kontinuierlich um die Frequenzdifferenz 92 angehoben bzw. erniedrigt werden. Bei einem von der Welligkeit der Busspannung unabhängigen Betrieb des Wandlers können anschließend die Schalter mit der neuen Schaltfrequenz 93 getaktet geschaltet werden.

Wie in Fig. 11 dargestellt wird die Schaltfrequenz um den Wert 93 periodisch verändert, gemäß der Periodizität der Spannungsrippel der Busspannung Vbus. Die entsprechende Periodendauer 95 ist viel größer als die Periodendauer einer Eigenschwingung des LLC-Resonanzkreises und als die in Betracht kommenden Periodendauern 60, 62 für Schaltzyklen der Schalter der Halbbrücke.

Die Anpassung der Frequenz gemäß der Welligkeit der Busspannung Vbus, mit der die primärseitige Schaltung versorgt wird, wie sie bei 94 dargestellt ist, kann gleichphasig oder gegenphasig zur Welligkeit der Busspannung Vbus sein, je nachdem, auf welchem Arbeitspunkt auf der Übertragungskurve des Wandlers der Wandler betrieben wird. Die Änderung erfolgt so, dass bei einem lokalen Maximum der Spannungsrippel der Busspannung Vbus die Erhöhung bzw. Erniedrigung der Schaltfrequenz zu einer Erniedrigung des Werts der Übertragungsfunktion führt, und/oder dass bei einem lokalen Minimum der Spannungsrippel der Busspannung Vbus die Erhöhung bzw. Erniedrigung der Schaltfrequenz zu einer Erhöhung des Werts der Übertragungsfunktion führt. Vorzeichen und Amplitude der periodischen Veränderung der Schaltfrequenz 94 sind aus der theoretischen Beschreibung des LLC-Wandlers bekannt. Die Steuereinrichtung 14 kann eine feste Amplitude der periodischen Veränderung der Schaltfrequenz verwenden und/oder diese Amplitude rechnerisch oder durch Abfrage einer Wertetabelle ermitteln.

Eine Verringerung der Welligkeit der Ausgangsspannung des Wandlers kann schon erreicht werden, wenn die Amplitude der wellenartigen Veränderung der Schaltfrequenz 94 lastunabhängig gewählt ist. Bei weiteren Ausgestaltungen kann sogar berücksichtigt werden, dass sich die Übertragungsfunktion des Wandlers als Funktion der Last verändert. Die Amplitude der wellenartigen Veränderung der Schaltfrequenz 94 kann abhängig von der detektierten Last bzw. abhängig von der diese Last anzeigenden Messgröße iavg gewählt werden. Das Fahren von Spannungsrampen nur zu dem Zweck, elektromagnetische Interferenz zu unterdrücken, kann somit unterbleiben.

FIG. 12 zeigt die Wirkung einer Anpassung der Steuerung der Halbbrücke abhängig von der Welligkeit der Versorgungsspannung Vbus 96 der primärseitigen Schaltung. Ohne Kompensation der Welligkeit weist die Ausgangsspannung 97 ebenfalls Spannungsrippel auf. Die Amplitude der Spannungsrippel kann durch eine zeitabhängig angepasste Steuerung der Halbbrücke reduziert werden. Bei einer Anpassung der Steuerung der Halbbrücke kann eine Ausgangsspannung 98 am Ausgang des Wandlers erreicht werden, deren Welligkeit im Vergleich zu der Ausgangsspannung 97 verringert ist.

Die zeitabhängige Anpassung der Schaltfrequenz der Schalter der Halbbrücke gemäß der Welligkeit der Busspannung Vbus kann auch Verbesserungen im Hinblick auf elektromagnetische Interferenz bieten. Die zeitabhängige Anpassung kann das spektrale Gewicht von Störspannungen, das ohne eine derartige zeitabhängige Anpassung bei einer einzigen Frequenz konzentriert wäre, über einen größeren Spektralbereich verteilen.

FIG. 13 illustriert eine derartige spektrale Verbreiterung im Spektrum der Störspannung V_{EMI}. Bei Schalten der Schalter der Halbbrücke mit einer fixen Frequenz weist das Spektrum 101 der Störspannung V_{EMI} einen scharfen Spektralpeak auf. Bei zeitabhängiger Anpassung der Schaltfrequenz der Schalter der Halbbrücke gemäß der Welligkeit der Busspannung Vbus ist das Spektrum 102 der Störspannung V_{EMI} verbreitert, so dass elektromagnetische Interferenz verringert werden kann.

Komplexere Methoden zur Steuerung der Halbbrücke können bei weiteren Ausführungsbeispielen der Erfindung realisiert werden. Beispielsweise kann für eine verbesserte Anpassbarkeit und Kontrolle des Wandlers die Steuerung der Halbbrücke nicht nur durch Kontrolle der Schaltfrequenz der Schalter erfolgen. Die Steuerung der Schalter der Halbbrücke kann kombiniert werden mit einer niederfrequenten Pulsweitenmodulation, bei der die Halbbrücke insgesamt für bestimmte Zeiträume ausgeschaltet wird, d.h. beide Schalter für einen bestimmten Zeitraum ausgeschaltet werden. Dieser Zeitraum kann mehrere Schaltzyklen der Schalter umfassen.

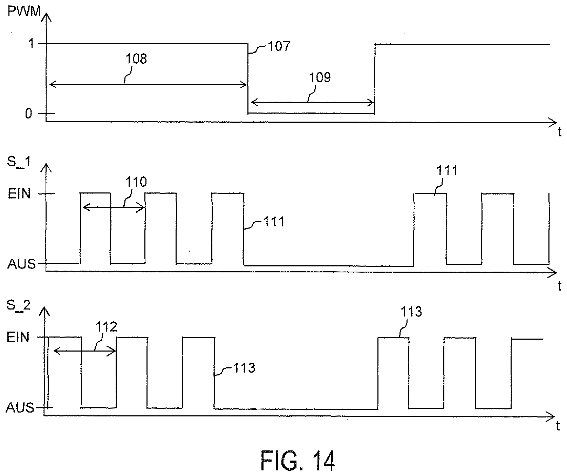

FIG. 14 illustriert die relevanten Signale für eine derartige Steuerung der Halbbrücke. Die Steuereinrichtung 14 erzeugt ein Signal 107 zur Pulsweitenmodulation der Halbbrücke. Dabei werden während einer Ein-Periode 108 der erste Schalter und der zweite Schalter der Halbbrücke wechselseitig getaktet geschaltet, wie bereits ausführlich beschrieben wurde. Die entsprechende Gatespannung 111 für den ersten Schalter 21 und die entsprechende Gatespannung 113 für den zweiten Schalter 22 der Halbbrücke durchläuft in der Ein-Periode 108 mehrere Schaltzyklen, die jeweils eine Periodendauer 110 bzw. 112 aufweisen.

In einer anschließenden Aus-Periode 109 bleiben sowohl der erste Schalter als auch der zweite Schalter ausgeschaltet. Die Steuereinrichtung 14 kann ein entsprechendes Steuersignal ausgeben, das sicherstellt, dass die Schalter während der Aus-Periode 109 ausgeschaltet bleiben. Die Dauer der Aus-Periode 109 kann mehrere Periodendauern 110, 112 umfassen.

Anschließend kann die Folge von Ein- und Aus-Perioden 108, 109 zyklisch wiederholt werden. Die Darstellung in FIG. 14 ist dabei insoweit schematisch, als die Dauer der Ein- und Aus-Perioden 108, 109 viel größer sein kann als die Periodendauern 110, 112 und beispielsweise zwischen einigen zehn und mehreren tausend solcher Periodendauern 110, 112 beinhalten kann. Das Verhältnis der Dauer von Ein- und Aus-Periode 108, 109 kann von der Steuereinrichtung 14 des Wandlers automatisch eingestellt werden. Die Anpassung kann abhängig von der primärseitig erfassten Messgröße und/oder abhängig von einer gewünschten Helligkeit erfolgen.

Die Verwendung einer primärseitigen niederfrequenten Pulsweitenmodulation, bei der die Halbbrücke während der Aus-Periode 109 ausgeschaltet wird, kann mit einem Betrieb ohne eine derartige niederfrequente Pulsweitenmodulation kombiniert werden. Ein Übergang zwischen den zwei Betriebsarten kann abhängig davon erfolgen, welche Leistung durch den Wandler übertragen werden soll. Falls die Leistung kleiner als ein Schwellenwert wird, kann ein Betrieb mit einer primärseitigen niederfrequenten Pulsweitenmodulation eingeleitet werden. Falls die Leistung den Schwellenwert übersteigt, kann der Betrieb ohne die primärseitige niederfrequente Pulsweitenmodulation beendet werden.

Während Ausführungsbeispiele unter Bezugnahme auf die Figuren beschrieben wurden, können Abwandlungen bei weiteren Ausführungsbeispielen realisiert werden. Während der Mittelwert des Stroms durch einen Shunt-Widerstand, der zwischen einen Schalter der Halbbrücke und Masse geschaltet ist, als Indikator für die Last verwendet werden kann, kann eine entsprechende primärseitige Detektion der Last auch an anderen Elementen der primärseitigen Schaltung durchgeführt werden. Beispielsweise kann ein separater Messwiderstand vorgesehen sein.

Die Steuereinrichtung der Wandler und LED-Konverter nach Ausführungsbeispielen kann als integrierte Halbleiterschaltung ausgestaltet sein. Die Steuereinrichtung kann als anwendungsspezifische Spezialschaltung (ASIC, "Application Specific Integrated Circuit") oder anderer Chip ausgestaltet sein. Andere Ausgestaltungen der Steuereinrichtung können verwendet werden.

Induktivitäten und Kapazitäten können jeweils durch entsprechende induktive bzw. kapazitive Elemente, beispielsweise als Spulen bzw. Kondensatoren, gebildet werden. Es ist jedoch auch möglich, dass kleinere Induktivitäten, beispielsweise die kleinere Induktivität des LLC-Resonanzkreises, als Streuinduktivität ausgebildet sind. Ähnlich können kleinere Kapazitäten als Streukapazitäten ausgebildet sein.

Es kann eine der Spulen des LLC-Resonanzkreises in einer Parallelschaltung mit einer Primärspule des Transformators vorgesehen sein, oder es kann bei weiteren Ausführungsbeispielen die Primärspule des Transformators auch als eine der Induktivitäten oder sogar beide Induktivitäten des LLC-Resonanzkreises wirken.

Wandler und Verfahren nach Ausführungsbeispielen können insbesondere zur Energieversorgung von Modulen mit LEDs eingesetzt werden.

## Patentansprüche

1. Verfahren zum Betreiben eines LLC-Resonanzwandlers (19; 79) für ein Leuchtmittel (3; 5; 50), insbesondere für ein Leuchtmittel (3; 5; 50) mit LEDs (52 - 54), wobei der LLC-Resonanzwandler (19; 79) eine primärseitige Schaltung (20; 80), die eine Halbbrücke (21, 22) und einen LLC-Resonanzkreis (25 - 27) umfasst, und eine davon galvanisch getrennte Sekundärseite (13; 30) aufweist, umfassend:
Steuerung der Halbbrücke (21, 22) durch getaktetes Schalten von Schaltern (21, 22) der Halbbrücke,
Detektieren einer Last (3; 5; 50), die von einem Ausgang (35) der Sekundärseite (13; 30) mit Energie versorgt wird, basierend auf einer in der primärseitigen Schaltung (20; 80) erfassten Messgröße (iavg), und
Anpassen der Steuerung der Halbbrücke (21, 22) basierend auf der in der primärseitigen Schaltung (20; 80) erfassten Messgröße (iavg),
**dadurch gekennzeichnet,**
**dass** eine Versorgungsspannung (Vbus; 96) der primärseitigen Schaltung (20; 80) zeitaufgelöst erfasst wird, und
**dass** die Steuerung der Halbbrücke (21, 22) abhängig von einer zeitlichen Veränderung der Versorgungsspannung (Vbus; 96) verändert wird.

2. Verfahren nach Anspruch 1,
wobei die Steuerung der Halbbrücke (21, 22) so angepasst wird, dass eine lastabhängige Verschiebung einer Ausgangsspannung (68) des LLC-Resonanzwandlers (19; 79) wenigstens teilweise kompensiert wird.

3. Verfahren nach Anspruch 2,
wobei das Anpassen der Steuerung der Halbbrücke (21, 22) umfasst: Einstellen einer Frequenz (93), mit der ein erster Schalter (21) und ein zweiter Schalter (22) der Halbbrücke getaktet geschaltet werden.

4. Verfahren nach Anspruch 3,
wobei eine Steuereinrichtung (14) die Frequenz (93) automatisch abhängig von der Messgröße (iavg) unter Verwendung einer Tabellenwertabfrage und/oder durch rechnerische Verarbeitung der Messgröße (iavg) einstellt.

5. Verfahren nach Anspruch 4,
wobei die Tabellenwertabfrage und/oder die rechnerische Verarbeitung von einer Lastabhängigkeit der Ausgangsspannung (68), die bei fester Taktung der Halbbrücke (21, 22) auftritt, abhängen.

6. Verfahren nach einem der vorhergehenden Ansprüche,
wobei die in der primärseitigen Schaltung (20; 80) erfasste Messgröße (iavg) zu einem Mittelwert eines Stroms proportional ist.

7. Verfahren nach Anspruch 6,
wobei die in der primärseitigen Schaltung (20; 80) erfasste Messgröße (iavg) zu einem Mittelwert eines Stroms durch einen Widerstand (23), der zwischen einen Schalter (22) der Halbbrücke und ein Referenzpotential, insbesondere Masse, geschaltet ist, proportional ist.

8. Verfahren nach Anspruch 6 oder Anspruch 7,
wobei ein Peakwert des Stroms (ipeak) erfasst wird und selektiv abhängig von einem Schwellenwertvergleich des Peakwerts (ipeak) ein Überstromschutz-Betriebsmodus für das Leuchtmittel (3; 5; 50) eingeleitet wird.

9. Verfahren nach einem der vorhergehenden Ansprüche,
wobei eine Taktung (94) der Halbbrücke (21, 22) abhängig von einer Welligkeit der Versorgungsspannung (Vbus; 96) der primärseitigen Schaltung (20; 80) zeitabhängig, insbesondere periodisch, verändert wird.

10. Verfahren nach einem der vorhergehenden Ansprüche,
wobei abhängig von der Messgröße (iavg) wenigstens eine der folgenden Aktionen ausgeführt wird:
- Leistungsbegrenzung;
- Fehlerdetektion zur Einleitung eines Fehlermodus;
- Erzeugen eines Signals in Abhängigkeit von der Messgröße (iavg) und Ausgaben des Signals an einen Signalbus (4).

11. Wandler für ein Leuchtmittel, umfassend
eine primärseitige Schaltung (20; 80) mit einer Halbbrücke (21, 22) und mit einem LLC-Resonanzkreis (25 - 27),
eine Sekundärseite (13; 30), die von der primärseitigen Schaltung (20; 80) galvanisch getrennt ist und die einen Ausgang (35) zur Energieversorgung des Leuchtmittels aufweist, und
eine Steuereinrichtung (14) zum Steuern der Halbbrücke (21, 22), wobei die Steuereinrichtung eingerichtet ist, um abhängig von einer in der primärseitigen Schaltung (20; 80) erfassten Messgröße (iavg) eine Last (3; 5; 50) am Ausgang (35) der Sekundärseite (13; 30) zu detektieren und um die Halbbrücke (21, 22) abhängig davon zu steuern,
**dadurch gekennzeichnet,**
**dass** die Steuereinrichtung (14) eingerichtet ist, um die Halbbrücke (21, 22) abhängig von einer zeitaufgelöst erfassten Versorgungsspannung (Vbus; 96) der primärseitigen Schaltung (20; 80) zu steuern.

12. Wandler nach Anspruch 11,
wobei die primärseitige Schaltung (20; 80) einen Widerstand (23) aufweist, der mit einem Schalter (22) der Halbbrücke in Reihe geschaltet ist, und
wobei die Steuereinrichtung (14) eingerichtet ist, um einen Mittelwert des Stroms durch den Widerstand (23) oder eine dazu proportionale Größe als Messgröße (iavg) zu verwenden, um eine lastabhängige Verschiebung einer Ausgangsspannung des Wandlers (19; 79) wenigstens teilweise zu kompensieren,
wobei die Steuereinrichtung (14) eingerichtet ist, um eine Frequenz (93), mit der ein erster Schalter (21) und ein zweiter Schalter (22) der Halbbrücke getaktet geschaltet werden, abhängig von der Messgröße (iavg) einzustellen.

13. Wandler nach Anspruch 11 oder Anspruch 12,
wobei die Steuereinrichtung (14) eingerichtet ist, um eine Taktung (90) der Halbbrücke (21, 22) abhängig von der zeitaufgelöst erfassten Versorgungsspannung (Vbus; 96) der primärseitigen Schaltung (20; 80) zu verändern.

14. Wandler nach Anspruch 11, der zur Durchführung des Verfahrens nach einem der Ansprüche 2-10 eingerichtet ist.

15. LED-Konverter, umfassend
den Wandler (19; 79) nach einem der Ansprüche 11-14,
wobei der LED-Konverter (2) als Konstantspannungsquelle ausgestaltet ist.

## Claims

1. A method for operating an LLC resonant transformer (19; 79) for a luminous means (3; 5; 50), in particular for a luminous means (3; 5; 50) with LEDs (52 - 54), wherein the LLC resonant transformer (19; 79) has a primary-side circuit (20; 80), which comprises a half-bridge (21, 22) and an LLC resonant circuit (25 - 27), and has a secondary side (13; 30) galvanically separated therefrom, comprising:
Control of the half-bridge (21, 22) by clocked switching of switches (21, 22) of the half-bridge,
detection of a load (3; 5; 50), which is supplied with energy by an output (35) of the secondary side (13; 30), based on a measurement variable (iavg) detected in the primary-side circuit (20; 80), and
adjustment of the control of the half-bridge (21, 22) based on the measurement variable (iavg) detected in the primary-side circuit (20; 80),
**characterized in**
**that** a supply voltage (Vbus; 96) of the primary-side circuit (20; 80) is detected in a time-resolved manner, and
**that** the control of the half-bridge (21, 22) is varied depending on a time variation of the supply voltage (Vbus; 96).

2. A method according to Claim 1,
wherein the control of the half-bridge (21, 22) is adjusted such that a load-dependent displacement of an output voltage (68) of the LLC resonant transformer (19; 79) is at least partially compensated for.

3. A method according to Claim 2,
wherein the adjustment of the control of the half-bridge (21, 22) comprises: Setting a frequency (93), with which a first switch (21) and a second switch (22) of the half-bridge are connected in a clocked manner.

4. A method according to Claim 3,
wherein a control device (14) automatically sets the frequency (93) depending on the measurement variable (iavg) using a table value query and/or by computational processing of the measurement variable (iavg).

5. A method according to Claim 4,
wherein the table value query and/or the computational processing depends on a load dependence of the output voltage (68), which occurs with fixed clocking of the half-bridge (21, 22).

6. A method according to any one of the preceding claims,
wherein the measurement variable (iavg) detected in the primary-side circuit (20; 80) is proportional to an average value of a current.

7. A method according to Claim 6,
wherein the measurement variable (iavg) detected in the primary-side circuit (20; 80) is proportional to an average value of a current through a resistor (23), which is connected between a switch (22) of the half-bridge and a reference potential, in particular ground.

8. A method according to Claim 6 or Claim 7,
wherein a peak value of the current (ipeak) is detected and an overcurrent protection-operation mode for the luminous means (3; 5; 50) is selectively introduced depending on a threshold value comparison of the peak value (ipeak).

9. A method according to any one of the preceding claims,
wherein a clocking (94) of the half-bridge (21, 22) is varied depending on a ripple of the supply voltage (Vbus; 96) of the primary-side circuit (20; 80) in a time-dependent, in particular, periodic manner.

10. A method according to any one of the preceding claims,
wherein depending on the measurement variable (iavg) at least one of the following actions is carried out:
- Power limitation;
- error detection for introducing an error mode;
- generation of a signal depending on the measurement variable (iavg) and output of the signal to a signal bus (4).

11. A transformer for a luminous means, comprising
a primary-side circuit (20; 80) with a half-bridge (21, 22) and with an LLC resonant circuit (25 - 27),
a secondary side (13; 30), which is galvanically separated from the primary-side circuit (20; 80) and which has an output (35) for the energy supply of the luminous means, and
a control device (14) for controlling the half-bridge (21, 22), wherein the control device is configured, in order to detect a load (3; 5; 50) at the output (35) of the secondary side (13; 30) depending on a measurement variable (iavg) detected in the primary-side circuit (20; 80) and to control the half-bridge (21, 22) depending thereon,
**characterized in**
**that** the control device (14) is configured, in order to control the half-bridge (21, 22) depending on a supply voltage (Vbus; 96) of the primary-side circuit (20; 80) detected in a time-resolved manner.

12. A transformer according to Claim 11,
wherein the primary-side circuit (20; 80) has a resistor (23), which is connected in series with a switch (22) of the half-bridge, and
wherein the control device (14) is configured, in order to use an average value of the current through the resistor (23) or a variable proportional thereto as measurement variable (iavg), in order to at least partially compensate for a load-dependent displacement of an output voltage of the transformer (19; 79), wherein the control device (14) is configured, in order to set a frequency (93), with which a first switch (21) and a second switch (22) of the half-bridge are connected in a clocked manner, depending on the measurement variable (iavg).

13. A transformer according to Claim 11 or Claim 12,
wherein the control device (14) is configured, in order to vary a clocking (90) of the half-bridge (21, 22) depending on the supply voltage (Vbus; 96) of the primary-side circuit (20; 80) detected in a time-resolved manner.

14. A transformer according to Claim 11, which is configured for implementing the method according to any one of Claims 2 - 10.

15. An LED converter, comprising
the transformer (19; 79) according to any one of Claims 11 - 14,
wherein the LED converter (2) is designed as a constant voltage source..

## Revendications

1. Procédé d'exploitation d'un convertisseur à résonance LLC (19 ; 79) pour un moyen d'éclairage (3 ; 5 ; 10), plus particulièrement pour un moyen d'éclairage (3 ; 5 ; 50) avec des LED (52 - 54), le convertisseur à résonance LLC (19 ; 79) comprenant un circuit côté primaire (20 ; 80), qui comprend un demi-pont (21, 22) et un circuit de résonance LLC (25 - 27), et un côté secondaire (13 ; 30) isolé galvaniquement de celui-ci, ce procédé comprenant :
la commande du demi-pont (21, 22) par commutation cadencée de commutateurs (21, 22) du demi-pont,
la détection d'une charge (3 ; 5 ; 50) qui est alimentée en énergie par une sortie (35) du côté secondaire (13; 30), sur la base d'une grandeur de mesure (iavg) mesurée dans le circuit côté primaire (20 ; 80) et
l'adaptation de la commande du demi-pont (21, 22) sur la base de la grandeur de mesure (iavg) mesurée dans le circuit côté primaire (20 ; 80),
**caractérisé en ce que**
une tension d'alimentation (Vbus ; 96) du circuit côté primaire (20 ; 80) est mesurée avec résolution temporelle et
la commande du demi-pont (21, 22) est modifiée en fonction d'une variation dans le temps de la tension d'alimentation (Vbus ; 96).

2. Procédé selon la revendication 1,
la commande du demi-pont (21, 22) étant adaptée de façon à ce qu'un décalage, en fonction de la charge, d'une tension de sortie (68) du convertisseur à résonance LLC (19 ; 79) soit compensé au moins partiellement.

3. Procédé selon la revendication 2,
l'adaptation de la commande du demi-pont (21, 22) comprenant : le réglage d'une fréquence (93) avec laquelle un premier commutateur (21) et un deuxième commutateur (22) du demi-pont sont commutés de manière cadencée.

4. Procédé selon la revendication 3,
un dispositif de commande (14) réglant la fréquence (93) automatiquement en fonction de la grandeur de mesure (iavg) en consultant des valeurs dans un tableau et/ou par un traitement par calcul de la grandeur de mesure (iavg).

5. Procédé selon la revendication 4,
la consultation de valeurs dans un tableau et/ou le traitement par calcul dépendant d'une dépendance de la charge en fonction de la tension de sortie (68), qui apparaît lors d'un cadencement fixe du demi-pont (21, 22).

6. Procédé selon l'une des revendications précédentes,
la grandeur de mesure (iavg) mesurée dans le circuit côté primaire (20 ; 80) étant proportionnelle à une valeur moyenne d'un courant.

7. Procédé selon la revendication 6,
la grandeur de mesure (iavg) mesurée dans le circuit côté primaire (20 ; 80) étant proportionnelle à une valeur moyenne d'un courant à travers une résistance (23), qui est branchée entre un commutateur (22) du demi-pont et un potentiel de référence, plus particulièrement la masse.

8. Procédé selon la revendication 6 ou 7,
une valeur de crête du courant (ipeak) étant mesurée et, de manière sélective, en fonction d'une comparaison de la valeur de crête (ipeak) avec une valeur seuil, un mode de fonctionnement de protection contre les surintensités est initié pour le moyen d'éclairage (3 ; 5 ; 50).

9. Procédé selon l'une des revendications précédentes,
un cadencement (94) du demi-pont (21, 22) étant modifié en fonction d'une ondulation de la tension d'alimentation (Vbus ; 96) du circuit côté primaire (20 ; 80) en fonction du temps, plus particulièrement de manière périodique.

10. Procédé selon l'une des revendications précédentes,
moyennant quoi, en fonction de la grandeur de mesure (iavg), au moins une des actions suivantes est exécutée :
- limitation de la puissance ;
- détection d'erreurs pour l'initiation d'un mode d'erreur ;
- génération d'un signal en fonction de la grandeur de mesure (iavg) et envoi du signal à un bus de signal (4).

11. Convertisseur pour un moyen d'éclairage, comprenant :
un circuit côté primaire avec un demi-pont (21, 22) et un circuit de résonance LLC (25 - 27),
un côté secondaire (13 ; 30) isolé galvaniquement du circuit côté primaire (20 ; 80) et qui comprend une sortie (35) pour l'alimentation en énergie du moyen d'éclairage et
un dispositif de commande (14) pour la commande du demi-pont (21, 22), le dispositif de commande étant conçu pour détecter, en fonction d'une grandeur de mesure (iavg) mesurée dans le circuit côté primaire (20 ; 80), une charge (3 ; 5 ; 50) à la sortie (35) du côté secondaire (13 ; 30) et pour commander le demi-pont (21, 22) en fonction de celle-ci,
**caractérisé en ce que**
le dispositif de commande (14) est conçu pour commander le demi-pont (21, 22) en fonction d'une tension d'alimentation (Vbus ; 96) du circuit côté primaire (20 ; 80) mesurée avec une résolution temporelle.

12. Convertisseur selon la revendication 11,
le circuit côté primaire (20 ; 80) comprenant une résistance (23) qui est branchée en série avec un commutateur (22) du demi-pont et
le dispositif de commande (14) étant conçu pour utiliser une valeur moyenne du courant à travers la résistance (23) ou d'une grandeur proportionnelle à celui-ci en tant que grandeur de mesure (iavg), afin de compenser au moins partiellement un décalage, due à la charge, d'une tension de sortie du convertisseur (19 ; 79),
le dispositif de commande (14) étant conçu pour régler une fréquence (93) avec laquelle un premier commutateur (21) et un deuxième commutateur (22) du demi-pont sont commutés de manière cadencée, en fonction de la grandeur de mesure (iavg).

13. Convertisseur selon la revendication 11 ou la revendication 12,
le dispositif de commande (14) étant conçu pour modifier un cadencement (90) du demi-pont (21, 22) en fonction de la tension d'alimentation (Vbus ; 96), mesurée avec une résolution temporelle, du circuit côté primaire (20 ; 80).

14. Convertisseur selon la revendication 11, qui est conçu pour l'exécution du procédé selon l'une des revendications 2 à 10.

15. Convertisseur à LED comprenant
le convertisseur (19 ; 79) selon l'une des revendications 11 à 14,
le convertisseur à LED (2) étant conçu comme une source de tension constante.
